# EUROPEAN PATENT SPECIFICATION

(11) **EP 4 345 762 B1**
(45) Date of publication and mention of the grant of the patent: **21.10.2026**
(21) Application number: 23220457.8
(22) Date of filing: 22.02.2018
(51) Int. Cl.: G02B 27/01, G06F 3/01, G06F 3/14, G06T 19/00

(54) **DISPLAY SYSTEM WITH VARIABLE POWER REFLECTOR**
ANZEIGESYSTEM MIT VARIABLEM LEISTUNGSREFLEKTOR
SYSTÈME D'AFFICHAGE DOTÉ D'UN RÉFLECTEUR DE PUISSANCE VARIABLE

(30) Priority: 23.02.2017 US 201762462850 P
(43) Date of publication of application: 03.04.2024
(62) Document number(s) of the earlier application(s) in accordance with Art. 76 EPC: 18757396.9 / 3 586 187
(73) Proprietor: Magic Leap, Inc., Plantation, FL 33322 (US)
(72) Inventor: SCHOWENGERDT, Brian T., Plantation, 33322 (US); MACNAMARA, John Graham, Plantation, 33322 (US); OH, Chulwoo, Plantation, 33322 (US)
(74) Representative: FRKelly

(56) References cited:
- US-A1- 2012 086 903
- US-A1- 2017 007 182

## Description

### Incorporation by Reference

This application claims the priority benefit of U.S. Provisional Patent Application No. 62/462,850 filed on February 23, 2017 entitled "VARIABLE-FOCUS VIRTUAL IMAGE DEVICES,".

### BACKGROUND

### Field

The present disclosure relates to optical devices, including augmented reality imaging and visualization systems, as e.g. described in document US 2017/007182 A1.

### Description of the Related Art

Modern computing and display technologies have facilitated the development of systems for so called "virtual reality" or "augmented reality" experiences, in which digitally reproduced images or portions thereof are presented to a user in a manner wherein they seem to be, or may be perceived as, real. A virtual reality, or "VR", scenario typically involves the presentation of digital or virtual image information without transparency to other actual real-world visual input; an augmented reality, or "AR", scenario typically involves presentation of digital or virtual image information as an augmentation to visualization of the actual world around the user. A mixed reality, or "MR", scenario is a type of AR scenario and typically involves virtual objects that are integrated into, and responsive to, the natural world. For example, an MR scenario may include AR image content that appears to be blocked by or is otherwise perceived to interact with objects in the real world.

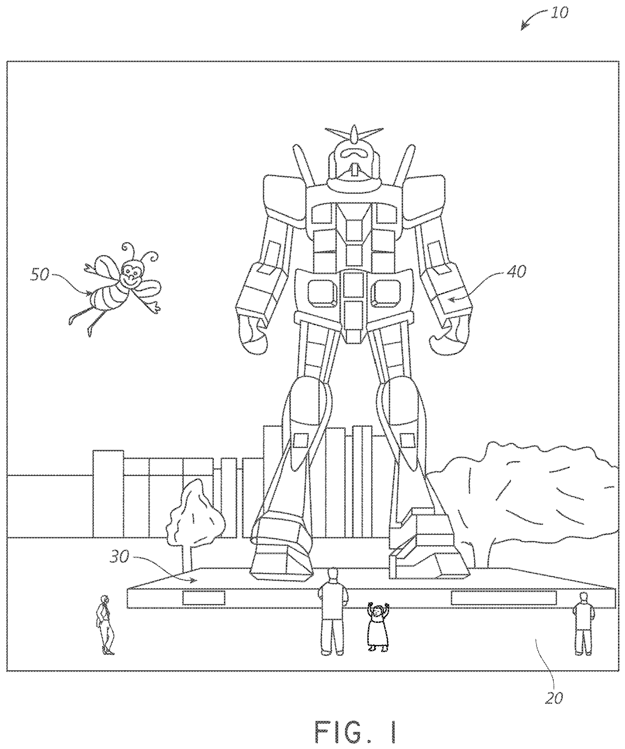

Referring to Figure 1, an augmented reality scene 1 is depicted. The user of an AR technology sees a real-world park-like setting 20 featuring people, trees, buildings in the background, and a concrete platform 30. The user also perceives that he "sees" "virtual content" such as a robot statue 40 standing upon the real-world platform 1120, and a flying cartoon-like avatar character 50 which seems to be a personification of a bumble bee. These elements 50, 40 are "virtual" in that they do not exist in the real world. Because the human visual perception system is complex, it is challenging to produce AR technology that facilitates a comfortable, natural-feeling, rich presentation of virtual image elements amongst other virtual or real-world imagery elements.

Systems and methods disclosed herein address various challenges related to AR and VR technology.

### SUMMARY

This application include discussions of systems and methods that can be employed to provide variable optical power. Variable focus or variable power devices may find application in certain head mounted display devices that project images as if the images originated from different depths. By changing the optical power of an optical element in the head mounted display device, images presented to the wearer of the head mounted display device appear as if located at different distances from the wearer. The variable focus or variable power optical device can thus be modulated to cause different image content to be displayed as if the image content is situated at different locations with respect to the user. Some variable power elements comprise reflectors comprising movable membranes. Other variable power elements comprise liquid crystal switchable devices that can switch between optical power levels using switchable liquid crystal elements. Some variable focus devices described herein utilize the polarization properties of light to facilitate switching from one focus to another.

The systems, methods and devices of this disclosure each have several innovative aspects, no single one of which is solely responsible for the desirable attributes disclosed herein. A variety of example systems and methods are provided below.

**Embodiment 1:** A wearable augmented reality head-mounted display system configured to pass light from the world forward a wearer wearing the head-mounted system into an eye of the wearer, said wearable augmented reality head mounted display system comprising:
an optical display configured to output light to form an image;
one or more waveguides disposed to receiving said light from said display;
a frame configured to dispose the waveguides forward of said eye such that said one or more waveguides have a forward side and a rearward side, said rearward side closer to said eye than said forward side;
a variable power reflector disposed on said forward side of said one or more waveguides, said variable optical power reflector configured to have an optical power that is adjustable upon application of an electrical signal; and
one or more out-coupling elements disposed with respect to said one or more waveguides to extract light from the one or more waveguides and direct at least a portion of said light propagating within said waveguide to the variable power reflector, said light being directed from said variable power reflector back through said waveguide and into said eye to present an image from the display into the eye of the wearer.

**Embodiment 2:** The system of Embodiment 1, wherein said optical display comprise a scanning fiber display or a liquid crystal display.

**Embodiment 3:** The system of any of the Embodiments 1-2, wherein said variable power reflector comprises a deformable reflective surface having an adjustable shape.

**Embodiment 4:** The system of Embodiment 3, wherein said variable power reflector includes at least one electrode to apply an electric field to deform said reflective surface.

**Embodiment 5:** The system of any of the Embodiments 1-4, wherein said variable power reflector comprises silicon nitride.

**Embodiment 6:** The system of any of the Embodiments 1-5, wherein said variable power reflector comprises one or more switchable optical elements configured to switch between two states.

**Embodiment 7:** The system of Embodiment 6, wherein said two states comprise two levels of reflection.

**Embodiment 8:** The system of Embodiments 6 or 7, wherein said two states comprise two levels of optical power.

**Embodiment 9:** The system of any of Embodiments 6, 7 or 8, wherein said two states comprise two levels of transmission.

**Embodiment 10:** The system of any of Embodiments 6-9, wherein said one or more switchable optical elements comprises a diffractive optical element.

**Embodiment 11:** The system of any of Embodiments 6-10, wherein said one or more switchable optical elements comprises a reflective element.

**Embodiment 12:** The system of any of Embodiments 6-11, wherein said one or more switchable optical elements comprises liquid crystal element comprising liquid crystal.

**Embodiment 13:** The system of any of Embodiments 6-12, wherein said one or more switchable optical elements comprises a switchable polarization grating or a switchable polymer dispersed liquid crystal element.

**Embodiment 14:** The system of any of the Embodiments 1-13, wherein said variable power reflector comprises a stack of switchable optical elements, different of said switchable optical elements associated with different optical powers such that said stack of switchable optical elements can switch between different optical powers.

**Embodiment 15:** The system of any of the Embodiments 1-14, wherein said variable power reflector is configured to reflect light from said display while transmitting light from the world forward the wearer.

**Embodiment 16:** The system of any of the Embodiments 1-15, wherein said variable power reflector includes wavelength selective filters to reflect light from said display while transmitting light from the world forward the wearer.

**Embodiment 17:** The system of any of the Embodiments 1-16, wherein said variable power reflector has a transmission spectrum that includes a notch, light having a wavelength corresponding to said notch being reflected from said variable power reflector more than wavelengths adjacent to said notch.

**Embodiment 18:** The system of Embodiment 17, wherein the wavelength corresponding to said notch is reflected at least two times as much as light having wavelengths adjacent to said notch.

**Embodiment 19:** The system of Embodiment 17, wherein the wavelength corresponding to said notch is reflected at least five times as much as light having wavelengths adjacent to said notch.

**Embodiment 20:** The system of any of Embodiments 17-19, wherein said display comprises a color light source having a color corresponding with said notch wavelength.

**Embodiment 21:** The system of Embodiment 20, wherein the color of said color light source corresponds to red, green, or blue light.

**Embodiment 22:** The system of any of the Embodiments 1-21, wherein said variable power reflector includes one or more polarization selective filters to reflect light from said display while transmitting light from the world forward the wearer.

**Embodiment 23:** The system of any of the Embodiments 1-22, wherein said one or more out-coupling elements are configured to direct more light extracted from the one or more waveguides to the forward side of the one or more waveguides in comparison to the reverse side.

**Embodiment 24:** The system of any of the Embodiments 1-23, wherein said one or more out-coupling elements comprise one or more metasurfaces, one or more liquid crystal polarization gratings, one or more volume phase holograms or any combination thereof.

**Embodiment 25:** The system of any of the Embodiments 1-24, further comprising electronics in electrical communication with said variable power reflector to drive said variable power reflector, said electronics configured to change said optical power so as to present different image content as if originating from different depth planes.

**Embodiment 26:** The system of Embodiment 25, wherein said electronics is configured to change said optical power on a frame by frame basis.

**Embodiment 27:** The system of Embodiment 25, wherein said electronics is configured to change said optical power on a pixel by pixel basis.

**Embodiment 28:** The system of any of the Embodiments 1-27, further comprising a light recycling system configured to re-direct light extracted from the one or more waveguides toward the rearward side of the one or more waveguides toward the forward side such that said light can be incident on said variable power reflector and directed to said eye of the wearer.

**Embodiment 29:** The system of Embodiment 28, wherein said light recycling system comprises one or more polarization control elements or polarization selective elements.

**Embodiment 30:** The system of Embodiment 28, wherein said light recycling system comprises a polarization selective reflector disposed between said one or more waveguides and said eye.

**Embodiment 31:** The system of Embodiment 30, wherein said light recycling system comprises one or more retarders disposed between said one or more light guides and said polarization selective reflector.

**Embodiment 32:** The system of Embodiment 31, wherein said one or more retarders is disposed between said one or more light guides and said polarization reflector introduces a net retardance of about a half wave.

**Embodiment 33:** The system of any of Embodiments 29-32, wherein said recycling system comprises one or more retarders disposed between said one or more light guides and variable power reflector.

**Embodiment 34:** The system of Embodiment 33, wherein said one or more retarders disposed between said one or more light guides and variable power reflector introduces a net retardance of about a quarter wave.

**Embodiment 35:** A display device, comprising:
a waveguide configured to propagate visible light under total internal reflection in a direction parallel to a major surface of the waveguide and to outcouple the visible light in a direction normal to the major surface;
a deformable mirror configured to reflect visible light having a first polarization, wherein the deformable mirror comprises at least one of a notch reflector or one or more cholesteric liquid crystal (CLC) layers, wherein each of the CLC layers comprises a plurality of chiral structures, wherein each of the chiral structures comprises a plurality of liquid crystal molecules that extend in a layer depth direction and are successively rotated in a first rotation direction, wherein arrangements of the liquid crystal molecules of the chiral structures vary periodically in a lateral direction perpendicular to the layer depth direction such that the one or more CLC layers are configured to Bragg-reflect incident light.

**Embodiment 36:** The display device of Embodiment 35, wherein the waveguide is configured to outcouple the visible light selectively towards the deformable mirror.

**Embodiment 37:** The display device of any of Embodiments 35 or 36, wherein different ones of the one or more CLC layers are configured to reflect visible light having a wavelength in a wavelength range corresponding to different ones of red, green or blue light, while being configured to transmit light having a wavelength outside the wavelength range.

**Embodiment 38:** The display device of any of Embodiments 35-37, wherein each of the chiral structures of the CLC layers comprises a plurality of liquid crystal molecules that extend in a layer depth direction by at least a helical pitch, wherein different ones of the one or more CLC layers have different helical pitches.

**Embodiment 39:** The display device of any of Embodiments 35-38, wherein different ones of the one or more CLC layers have substantially the same optical power.

**Embodiment 40:** The display device of any of Embodiments 35-39, wherein the display device comprises a plurality of notch reflectors, wherein each of the notch reflectors is configured to reflect visible light having a first polarization, wherein each of the notch reflector comprises one or more cholesteric liquid crystal (CLC) layers, wherein each of the CLC layers comprises a plurality of chiral structures, wherein each of the chiral structures comprises a plurality of liquid crystal molecules that extend in a layer depth direction and are successively rotated in a first rotation direction, wherein arrangements of the liquid crystal molecules of the chiral structures vary periodically in a lateral direction perpendicular to the layer depth direction such that the one or more CLC layers are configured to Bragg-reflect incident light.

**Embodiment 41:** The display device of Embodiment 40, wherein different ones of the plurality of notch reflectors have different optical powers.

**Embodiment 42:** The display device of Embodiment 40, further comprising a half-wave plate corresponding to each of the plurality of notch reflectors.

**Embodiment 43:** A display device, comprising:
a light projector configured to output light to form an image;
a waveguide assembly configured to receive light from the light projector, the waveguide assembly configured to propagate the received light via total internal reflection in a direction parallel to a major surface of the waveguide assembly and to outcouple the received light in a direction normal to the major surface, the waveguide assembly having a rearward side disposed closer to an eye of an user and a forward side disposed opposite the rearward side; and
a deformable mirror configured to reflect a portion of the outcoupled light having a characteristic, the deformable mirror disposed on the forward side of the waveguide assembly.

**Embodiment 44:** The display device of Embodiment 43, wherein the characteristic of portion of the outcoupled light comprises a polarization characteristic.

**Embodiment 45:** The display device of Embodiments 43 or 44, wherein the characteristic of portion of the outcoupled light comprises a wavelength characteristic.

**Embodiment 46:** The display device of any of Embodiments 43-45, wherein the deformable mirror comprises a polarizing reflector configured to reflect a portion of the outcoupled light having a polarization characteristic.

**Embodiment 47:** The display device of any of Embodiments 43-46, wherein the deformable mirror comprises a notch reflector configured to reflect light within a wavelength range.

**Embodiment 48:** The display device of any of Embodiments 43-47, further comprising a polarizer disposed on the rearward side of the waveguide assembly.

**Embodiment 49:** The display device of any of Embodiments 43-48, wherein the deformable mirror comprises one or more cholesteric liquid crystal (CLC) layers, wherein each of the CLC layers comprises a plurality of chiral structures, wherein each of the chiral structures comprises a plurality of liquid crystal molecules that extend in a layer depth direction and are successively rotated in a first rotation direction, wherein arrangements of the liquid crystal molecules of the chiral structures vary periodically in a lateral direction perpendicular to the layer depth direction such that the one or more CLC layers are configured to Bragg-reflect incident light.

**Embodiment 50:** The display device of any of Embodiments 43-49, wherein the waveguide assembly comprises one or more liquid crystal layers.

**Embodiment 51:** The system of any of Embodiments 6-11, wherein said one or more switchable optical elements comprise a cholesteric liquid crystal (CLC).

**Embodiment 52:** The system of any of the Embodiments 1-23, wherein said one or more out-coupling elements comprise a cholesteric liquid crystal (CLC).

**Embodiment 53:** A display device, comprising:
a waveguide configured to propagate visible light under total internal reflection in a direction parallel to a major surface of the waveguide and to outcouple the visible light in a direction normal to the major surface;
a notch reflector configured to reflect visible light having a first polarization, wherein the notch reflector comprises one or more cholesteric liquid crystal (CLC) layers, wherein each of the CLC layers comprises a plurality of chiral structures, wherein each of the chiral structures comprises a plurality of liquid crystal molecules that extend in a layer depth direction and are successively rotated in a first rotation direction, wherein arrangements of the liquid crystal molecules of the chiral structures vary periodically in a lateral direction perpendicular to the layer depth direction such that the one or more CLC layers are configured to Bragg-reflect incident light.

**Embodiment 54:** The display device of Embodiment 53, wherein the waveguide is configured to outcouple the visible light selectively towards the notch reflector.

**Embodiment 55:** The display device of any of Embodiments 53 or 54, wherein the notch reflector comprises a deformable mirror having the one or more CLC layers formed thereon.

**Embodiment 56:** The display device of any of Embodiments 53-55, wherein different ones of the one or more CLC layers are configured to reflect visible light having a wavelength in a wavelength range corresponding to different ones of red, green or blue light, while being configured to transmit light having a wavelength outside the wavelength range.

**Embodiment 57:** The display device of any of Embodiments 53-56, wherein each of the chiral structures of the CLC layers comprises a plurality of liquid crystal molecules that extend in a layer depth direction by at least a helical pitch, wherein different ones of the one or more CLC layers have different helical pitches.

**Embodiment 58:** The display device of any of Embodiments 53-58, wherein different ones of the one or more CLC layers have substantially the same optical power.

**Embodiment 59:** The display device of Embodiment 53, wherein the display device comprises a plurality of notch reflectors, wherein each of the notch reflectors is configured to reflect visible light having a first polarization, wherein each of the notch reflector comprises one or more cholesteric liquid crystal (CLC) layers, wherein each of the CLC layers comprises a plurality of chiral structures, wherein each of the chiral structures comprises a plurality of liquid crystal molecules that extend in a layer depth direction and are successively rotated in a first rotation direction, wherein arrangements of the liquid crystal molecules of the chiral structures vary periodically in a lateral direction perpendicular to the layer depth direction such that the one or more CLC layers are configured to Bragg-reflect incident light.

**Embodiment 60:** The display device of Embodiment 59, wherein different ones of the plurality of notch reflectors have different optical powers.

**Embodiment 61:** The display device of Embodiments 59 or 60, further comprising a half-wave plate corresponding to each of the plurality of notch reflectors.

### BRIEF DESCRIPTION OF THE DRAWINGS

Figure 1 illustrates a user's view of augmented reality (AR) through an AR device.
Figure 2 illustrates an example of wearable display system.
Figure 3 illustrates a conventional display system for simulating three-dimensional imagery for a user.
Figure 4 illustrates aspects of an approach for simulating three-dimensional imagery using multiple depth planes.
Figures 5A-5C illustrate relationships between radius of curvature and focal radius.
Figure 6 illustrates an example of a waveguide stack for outputting image information to a user.
Figure 7 illustrates an example of exit beams outputted by a waveguide.
Figure 8 illustrates an example of a stacked waveguide assembly in which each depth plane includes images formed using multiple different component colors.
Figure 9A illustrates a cross-sectional side view of an example of a set of stacked waveguides that each includes an incoupling optical element.
Figure 9B illustrates a perspective view of an example of the plurality of stacked waveguides of Figure 9A.
Figure 9C illustrates a top-down plan view of an example of the plurality of stacked waveguides of Figures 9A and 9B.
Figure 10A illustrates a wearable augmented reality head-mounted display system that includes a variable power reflector disposed to receive light from the light projector system.
Figure 10B illustrates the light projection system of Figure 10A where the variable power reflector creates virtual images as if emanating from an object at infinity.
Figure 10C illustrates a variable power reflector that is polarization selective and that uses the polarization of light to determine what light is reflected and what light is transmitted.
Figure 10D illustrates an example display device comprising a deformable mirror and a waveguide assembly with a liquid crystal grating.
Figure 11 illustrates a display device including light recycling system comprising an arrangement of retarders that are configured to redirect injected light from the waveguide that is outcoupled towards the user's eye towards the reflector.
Figure 12 illustrates a variable power reflector that can comprise one or more switchable optical elements such as a stack or a plurality of switchable reflective elements.
Figures 13A-13C illustrate example reflective diffraction lenses that can be implemented as part of a display device, where the reflective diffraction lenses are formed of patterned CLC materials serving as a reflective polarizing mirror.
Figure 14 illustrates an embodiment of a stack or plurality of switchable reflective elements having a plurality of switchable reflective elements.

### DETAILED DESCRIPTION

A wearable augmented reality head-mounted display system can be configured to pass light from the world forward a wearer wearing the head-mounted system into an eye of the wearer. The head-mounted display system can include an optical display that is configured to output light to form an image. The display system may include a frame that includes waveguides that are forward of the eye such that said one or more waveguides have a forward side and a rearward side and such that the rearward side is closer to the eye than the forward side. The system may include one or more waveguides that are disposed to receiving the light from the display. A variable power reflector can be disposed on the forward side of the one or more waveguides. The reflector can be configured to have an optical power that is adjustable upon application of an electrical signal. The system may further include one or more out-coupling elements that are disposed with respect to the one or more waveguides to extract light from the one or more waveguides. The elements may direct at least a portion of the light propagating within the waveguide to the variable power reflector. The light being directed from the variable power reflector may be reflected back through the waveguide and into the eye to present an image from the display into the eye of the wearer.

The optical display may include a scanning fiber display or a liquid crystal display. In some variants, the variable power reflector includes a deformable reflective surface that has an adjustable shape. The variable power reflector may include at least one electrode to apply an electric field to deform the reflective surface. The variable power reflector may include silicon nitride. The variable power reflector may include one or more switchable optical elements that are configured to switch between two states. The two states may include two levels of reflection, two levels of optical power, and/or two levels of transmission.

The one or more switchable optical elements may include a diffractive optical element, a reflective element, and/or a liquid crystal element that includes liquid crystal.

The head-mounted display system may include one or more switchable polarization gratings or switchable polymer dispersed liquid crystal elements. The variable power reflector may include a stack of switchable optical elements associated with different optical powers such that the switchable optical element can switch between different optical powers.

In some cases, the variable power reflector is configured to reflect light from the display while transmitting light from the world forward the wearer. The variable power reflector may include wavelength selective filters to reflect light from the display while transmitting light from the world forward the wearer. The variable power reflector may have a transmission spectrum that includes a notch in such a way that light that has a wavelength corresponding to the notch is reflected from the variable power reflector more than wavelengths that are adjacent to the notch. The wavelength corresponding to the notch may be reflected at least five times as much as light having wavelengths adjacent to the notch.

The head-mounted display may include a color light source that produces a color corresponding with the notch wavelength. For example, the color of the color light source may correspond to red, green, or blue light.

The variable power reflector may include polarization selective filters to reflect light from the display while transmitting light from the world forward the wearer.

In some designs, the one or more out-coupling elements are configured to direct more light that is extracted from the one or more waveguides to the forward side of the one or more waveguides in comparison to the reverse side. The one or more out-coupling elements may include one or more metasurfaces, one or more liquid crystal polarization gratings, one or more volume phase holograms or any combination thereof.

The display system may include electronics that are in electrical communication with the variable power reflector to drive the variable power reflector. The electronics can be configured to change the optical power so as to present different image content as if originating from different depth planes. The electronics may be configured to change the optical power on a frame by frame basis or a pixel by pixel basis.

The system may include a recycling system. The recycling system may be configured to re-direct light that is extracted from the one or more waveguides toward the rearward side of the one or more waveguides toward the forward side such that the light can be incident on the variable power reflector and directed to the eye of the wearer. The recycling system may include one or more polarization control elements or polarization selective elements. The recycling system may include a polarization selective reflector that is disposed between the one or more waveguides and the eye.

The recycling system can include one or more retarders that are disposed between the one or more light guides and the polarization reflector. The one or more retarders that are disposed between the one or more light guides and the polarization reflector can be configured to introduce a net retardance of about a half wave.

In some designs, the recycling system may include one or more retarders that are disposed between the one or more light guides and the variable power reflector. The one or more retarders that are disposed between the one or more light guides and the variable power reflector can be configured to introduce a net retardance of about a quarter wave.

Reference will now be made to the figures, in which like reference numerals refer to like parts throughout.

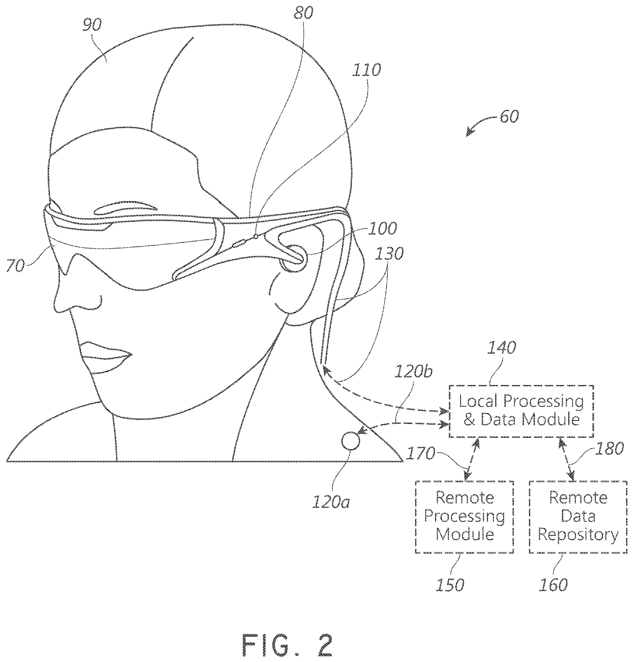

Figure 2 illustrates an example of wearable display system 60. The display system 60 includes a display 70, and various mechanical and electronic modules and systems to support the functioning of that display 70. The display 70 may be coupled to a frame 80, which is wearable by a display system user or viewer 90 and which is configured to position the display 70 in front of the eyes of the user 90. The display 70 may be considered eyewear in some embodiments. In some embodiments, a speaker 100 is coupled to the frame 80 and configured to be positioned adjacent the ear canal of the user 90 (in some embodiments, another speaker, not shown, may optionally be positioned adjacent the other ear canal of the user to provide stereo/shapeable sound control). The display system may also include one or more microphones 110 or other devices to detect sound. In some embodiments, the microphone is configured to allow the user to provide inputs or commands to the system 60 (e.g., the selection of voice menu commands, natural language questions, etc.), and/or may allow audio communication with other persons (e.g., with other users of similar display systems. The microphone may further be configured as a peripheral sensor to collect audio data (e.g., sounds from the user and/or environment). In some embodiments, the display system may also include a peripheral sensor 120a, which may be separate from the frame 80 and attached to the body of the user 90 (e.g., on the head, torso, an extremity, etc. of the user 90). The peripheral sensor 120a may be configured to acquire data characterizing a physiological state of the user 90 in some embodiments. For example, the sensor 120a may be an electrode.

With continued reference to Figure 2, the display 70 is operatively coupled by communications link 130, such as by a wired lead or wireless connectivity, to a local data processing module 140 which may be mounted in a variety of configurations, such as fixedly attached to the frame 80, fixedly attached to a helmet or hat worn by the user, embedded in headphones, or otherwise removably attached to the user 90 (e.g., in a backpack-style configuration, in a belt-coupling style configuration). Similarly, the sensor 120a may be operatively coupled by communications link 120b, e.g., a wired lead or wireless connectivity, to the local processor and data module 140. The local processing and data module 140 may comprise a hardware processor, as well as digital memory, such as non-volatile memory (e.g., flash memory or hard disk drives), both of which may be utilized to assist in the processing, caching, and storage of data. The data include data a) captured from sensors (which may be, e.g., operatively coupled to the frame 80 or otherwise attached to the user 90), such as image capture devices (such as cameras), microphones, inertial measurement units, accelerometers, compasses, GPS units, radio devices, gyros, and/or other sensors disclosed herein; and/or b) acquired and/or processed using remote processing module 150 and/or remote data repository 160 (including data relating to virtual content), possibly for passage to the display 70 after such processing or retrieval. The local processing and data module 140 may be operatively coupled by communication links 170, 180, such as via a wired or wireless communication links, to the remote processing module 150 and remote data repository 160 such that these remote modules 150, 160 are operatively coupled to each other and available as resources to the local processing and data module 140. In some embodiments, the local processing and data module 140 may include one or more of the image capture devices, microphones, inertial measurement units, accelerometers, compasses, GPS units, radio devices, and/or gyros. In some other embodiments, one or more of these sensors may be attached to the frame 80, or may be standalone structures that communicate with the local processing and data module 140 by wired or wireless communication pathways.

With continued reference to Figure 2, in some embodiments, the remote processing module 150 may comprise one or more processors configured to analyze and process data and/or image information. In some embodiments, the remote data repository 160 may comprise a digital data storage facility, which may be available through the internet or other networking configuration in a "cloud" resource configuration. In some embodiments, the remote data repository 160 may include one or more remote servers, which provide information, e.g., information for generating augmented reality content, to the local processing and data module 140 and/or the remote processing module 150. In some embodiments, all data is stored and all computations are performed in the local processing and data module, allowing fully autonomous use from a remote module.

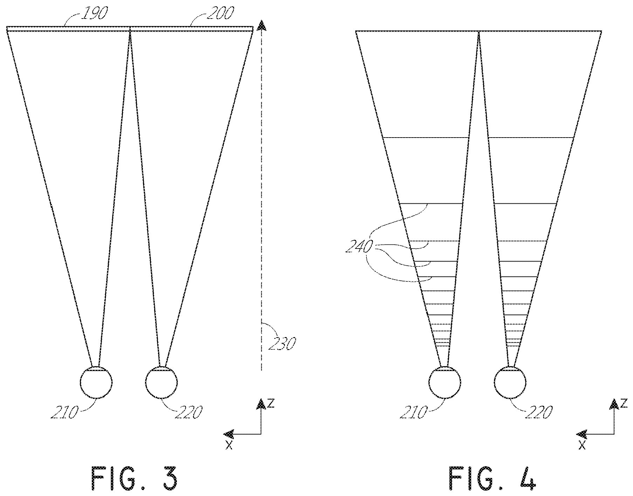

With reference now to Figure 3, the perception of an image as being "three-dimensional" or "3-D" may be achieved by providing slightly different presentations of the image to each eye of the viewer. Figure 3 illustrates a conventional display system for simulating three-dimensional imagery for a user. Two distinct images 190, 200-one for each eye 210, 220-are outputted to the user. The images 190, 200 are spaced from the eyes 210, 220 by a distance 230 along an optical or z-axis that is parallel to the line of sight of the viewer. The images 190, 200 are flat and the eyes 210, 220 may focus on the images by assuming a single accommodated state. Such 3-D display systems rely on the human visual system to combine the images 190, 200 to provide a perception of depth and/or scale for the combined image.

It will be appreciated, however, that the human visual system is more complicated and providing a realistic perception of depth is more challenging. For example, many viewers of conventional "3-D" display systems find such systems to be uncomfortable or may not perceive a sense of depth at all. Without being limited by theory, it is believed that viewers of an object may perceive the object as being "three-dimensional" due to a combination of vergence and accommodation. Vergence movements (i.e., rotation of the eyes so that the pupils move toward or away from each other to converge the lines of sight of the eyes to fixate upon an object) of the two eyes relative to each other are closely associated with focusing (or "accommodation") of the lenses and pupils of the eyes. Under normal conditions, changing the focus of the lenses of the eyes, or accommodating the eyes, to change focus from one object to another object at a different distance will automatically cause a matching change in vergence to the same distance, under a relationship known as the "accommodation-vergence reflex," as well as pupil dilation or constriction. Likewise, a change in vergence will trigger a matching change in accommodation of lens shape and pupil size, under normal conditions. As noted herein, many stereoscopic or "3-D" display systems display a scene using slightly different presentations (and, so, slightly different images) to each eye such that a three-dimensional perspective is perceived by the human visual system. Such systems are uncomfortable for many viewers, however, since they, among other things, simply provide different presentations of a scene, but with the eyes viewing all the image information at a single accommodated state, and work against the "accommodation-vergence reflex." Display systems that provide a better match between accommodation and vergence may form more realistic and comfortable simulations of three-dimensional imagery.

Figure 4 illustrates aspects of an approach for simulating three-dimensional imagery using multiple depth planes. With reference to Figure 4, objects at various distances from eyes 210, 220 on the z-axis are accommodated by the eyes 210, 220 so that those objects are in focus. The eyes 210, 220 assume particular accommodated states to bring into focus objects at different distances along the z-axis. Consequently, a particular accommodated state may be said to be associated with a particular one of depth planes 240, with has an associated focal distance, such that objects or parts of objects in a particular depth plane are in focus when the eye is in the accommodated state for that depth plane. In some embodiments, three-dimensional imagery may be simulated by providing different presentations of an image for each of the eyes 210, 220, and also by providing different presentations of the image corresponding to each of the depth planes. While shown as being separate for clarity of illustration, it will be appreciated that the fields of view of the eyes 210, 220 may overlap, for example, as distance along the z-axis increases. In addition, while shown as flat for ease of illustration, it will be appreciated that the contours of a depth plane may be curved in physical space, such that all features in a depth plane are in focus with the eye in a particular accommodated state.

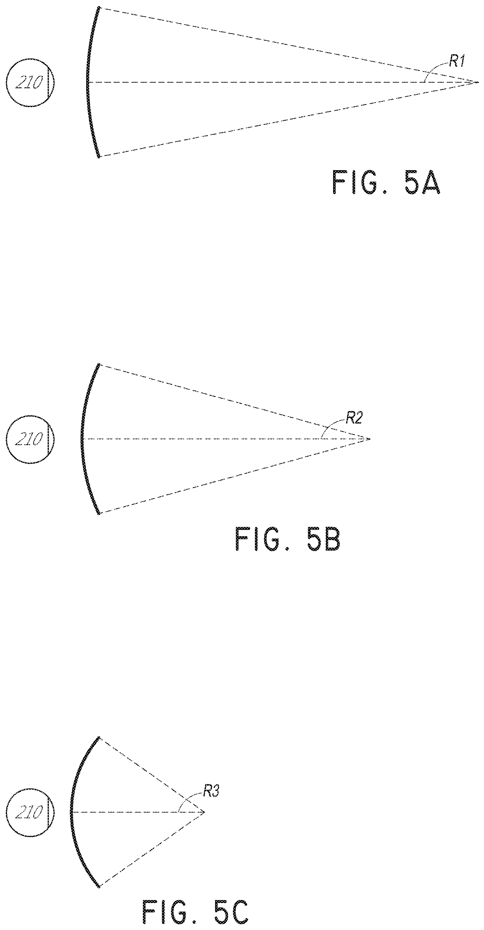

The distance between an object and the eye 210 or 220 may also change the amount of divergence of light from that object, as viewed by that eye. Figures 5A-5C illustrate relationships between distance and the divergence of light rays. The distance between the object and the eye 210 is represented by, in order of decreasing distance, R1, R2, and R3. As shown in Figures 5A-5C, the light rays become more divergent as distance to the object decreases. As distance increases, the light rays become more collimated. Stated another way, it may be said that the light field produced by a point (the object or a part of the object) has a spherical wavefront curvature, which is a function of how far away the point is from the eye of the user. The curvature increases with decreasing distance between the object and the eye 210. Consequently, at different depth planes, the degree of divergence of light rays is also different, with the degree of divergence increasing with decreasing distance between depth planes and the viewer's eye 210. While only a single eye 210 is illustrated for clarity of illustration in Figures 5A-5C and other figures herein, it will be appreciated that the discussions regarding eye 210 may be applied to both eyes 210 and 220 of a viewer.

Without being limited by theory, it is believed that the human eye typically can interpret a finite number of depth planes to provide depth perception. Consequently, a highly believable simulation of perceived depth may be achieved by providing, to the eye, different presentations of an image corresponding to each of these limited number of depth planes. The different presentations may be separately focused by the viewer's eyes, thereby helping to provide the user with depth cues based on the accommodation of the eye required to bring into focus different image features for the scene located on different depth plane and/or based on observing different image features on different depth planes being out of focus.

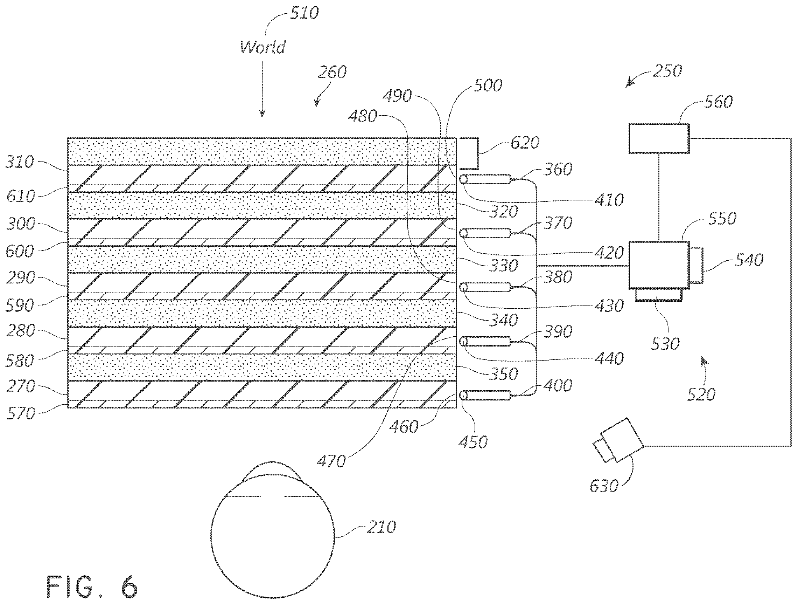

Figure 6 illustrates an example of a waveguide stack for outputting image information to a user. A display system 250 includes a stack of waveguides, or stacked waveguide assembly, 260 that may be utilized to provide three-dimensional perception to the eye/brain using a plurality of waveguides 270, 280, 290, 300, 310. In some embodiments, the display system 250 is the system 60 of Figure 2, with Figure 6 schematically showing some parts of that system 60 in greater detail. For example, the waveguide assembly 260 may be part of the display 70 of Figure 2. It will be appreciated that the display system 250 may be considered a light field display in some embodiments. In addition, the waveguide assembly 260 may also be referred to as an eyepiece.

With continued reference to Figure 6, the waveguide assembly 260 may also include a plurality of features 320, 330, 340, 350 between the waveguides. In some embodiments, the features 320, 330, 340, 350 may be one or more lenses. The waveguides 270, 280, 290, 300, 310 and/or the plurality of lenses 320, 330, 340, 350 may be configured to send image information to the eye with various levels of wavefront curvature or light ray divergence. Each waveguide level may be associated with a particular depth plane and may be configured to output image information corresponding to that depth plane. Image injection devices 360, 370, 380, 390, 400 may function as a source of light for the waveguides and may be utilized to inject image information into the waveguides 270, 280, 290, 300, 310, each of which may be configured, as described herein, to distribute incoming light across each respective waveguide, for output toward the eye 210. Light exits an output surface 410, 420, 430, 440, 450 of the image injection devices 360, 370, 380, 390, 400 and is injected into a corresponding input surface 460, 470, 480, 490, 500 of the waveguides 270, 280, 290, 300, 310. In some embodiments, the each of the input surfaces 460, 470, 480, 490, 500 may be an edge of a corresponding waveguide, or may be part of a major surface of the corresponding waveguide (that is, one of the waveguide surfaces directly facing the world 510 or the viewer's eye 210). In some embodiments, a single beam of light (e.g. a collimated beam) may be injected into each waveguide to output an entire field of cloned collimated beams that are directed toward the eye 210 at particular angles (and amounts of divergence) corresponding to the depth plane associated with a particular waveguide. In some embodiments, a single one of the image injection devices 360, 370, 380, 390, 400 may be associated with and inject light into a plurality (e.g., three) of the waveguides 270, 280, 290, 300, 310.

In some embodiments, the image injection devices 360, 370, 380, 390, 400 are discrete displays that each produce image information for injection into a corresponding waveguide 270, 280, 290, 300, 310, respectively. In some other embodiments, the image injection devices 360, 370, 380, 390, 400 are the output ends of a single multiplexed display which may, e.g., pipe image information via one or more optical conduits (such as fiber optic cables) to each of the image injection devices 360, 370, 380, 390, 400. It will be appreciated that the image information provided by the image injection devices 360, 370, 380, 390, 400 may include light of different wavelengths, or colors (e.g., different component colors, as discussed herein).

In some embodiments, the light injected into the waveguides 270, 280, 290, 300, 310 is provided by a light projector system 520, which comprises a light module 530, which may include a light emitter, such as a light emitting diode (LED). The light from the light module 530 may be directed to and modified by a light modulator 540, e.g., a spatial light modulator, via a beam splitter 550. The light modulator 540 may be configured to change the perceived intensity of the light injected into the waveguides 270, 280, 290, 300, 310. Examples of spatial light modulators include liquid crystal displays (LCD) including a liquid crystal on silicon (LCOS) displays. It will be appreciated that the image injection devices 360, 370, 380, 390, 400 are illustrated schematically and, in some embodiments, these image injection devices may represent different light paths and locations in a common projection system configured to output light into associated ones of the waveguides 270, 280, 290, 300, 310.

In some embodiments, the display system 250 may be a scanning fiber display comprising one or more scanning fibers configured to project light in various patterns (e.g., raster scan, spiral scan, Lissajous patterns, etc.) into one or more waveguides 270, 280, 290, 300, 310 and ultimately to the eye 210 of the viewer. In some embodiments, the illustrated image injection devices 360, 370, 380, 390, 400 may schematically represent a single scanning fiber or a bundle of scanning fibers configured to inject light into one or a plurality of the waveguides 270, 280, 290, 300, 310. In some other embodiments, the illustrated image injection devices 360, 370, 380, 390, 400 may schematically represent a plurality of scanning fibers or a plurality of bundles of scanning fibers, each of which are configured to inject light into an associated one of the waveguides 270, 280, 290, 300, 310. It will be appreciated that one or more optical fibers may be configured to transmit light from the light module 530 to the one or more waveguides 270, 280, 290, 300, 310. It will be appreciated that one or more intervening optical structures may be provided between the scanning fiber, or fibers, and the one or more waveguides 270, 280, 290, 300, 310 to, e.g., redirect light exiting the scanning fiber into the one or more waveguides 270, 280, 290, 300, 310.

A controller 560 controls the operation of one or more of the stacked waveguide assembly 260, including operation of the image injection devices 360, 370, 380, 390, 400, the light source 530, and the light modulator 540. In some embodiments, the controller 560 is part of the local data processing module 140. The controller 560 includes programming (e.g., instructions in a non-transitory medium) that regulates the timing and provision of image information to the waveguides 270, 280, 290, 300, 310 according to, e.g., any of the various schemes disclosed herein. In some embodiments, the controller may be a single integral device, or a distributed system connected by wired or wireless communication channels. The controller 560 may be part of the processing modules 140 or 150 (Figure 2) in some embodiments.

With continued reference to Figure 6, the waveguides 270, 280, 290, 300, 310 may be configured to propagate light within each respective waveguide by total internal reflection (TIR). The waveguides 270, 280, 290, 300, 310 may each be planar or have another shape (e.g., curved), with major top and bottom surfaces and edges extending between those major top and bottom surfaces. In the illustrated configuration, the waveguides 270, 280, 290, 300, 310 may each include out-coupling optical elements 570, 580, 590, 600, 610 that are configured to extract light out of a waveguide by redirecting the light, propagating within each respective waveguide, out of the waveguide to output image information to the eye 210. Extracted light may also be referred to as out-coupled light and the out-coupling optical elements light may also be referred to light extracting optical elements. An extracted beam of light may be outputted by the waveguide at locations at which the light propagating in the waveguide strikes a light extracting optical element. The out-coupling optical elements 570, 580, 590, 600, 610 may, for example, be gratings, including diffractive optical features, as discussed further herein. While illustrated disposed at the bottom major surfaces of the waveguides 270, 280, 290, 300, 310, for ease of description and drawing clarity, in some embodiments, the out-coupling optical elements 570, 580, 590, 600, 610 may be disposed at the top and/or bottom major surfaces, and/or may be disposed directly in the volume of the waveguides 270, 280, 290, 300, 310, as discussed further herein. In some embodiments, the out-coupling optical elements 570, 580, 590, 600, 610 may be formed in a layer of material that is attached to a transparent substrate to form the waveguides 270, 280, 290, 300, 310. In some other embodiments, the waveguides 270, 280, 290, 300, 310 may be a monolithic piece of material and the out-coupling optical elements 570, 580, 590, 600, 610 may be formed on a surface and/or in the interior of that piece of material.

With continued reference to Figure 6, as discussed herein, each waveguide 270, 280, 290, 300, 310 is configured to output light to form an image corresponding to a particular depth plane. For example, the waveguide 270 nearest the eye may be configured to deliver collimated light (which was injected into such waveguide 270), to the eye 210. The collimated light may be representative of the optical infinity focal plane. The next waveguide up 280 may be configured to send out collimated light which passes through the first lens 350 (e.g., a negative lens) before it can reach the eye 210; such first lens 350 may be configured to create a slight convex wavefront curvature so that the eye/brain interprets light coming from that next waveguide up 280 as coming from a first focal plane closer inward toward the eye 210 from optical infinity. Similarly, the third up waveguide 290 passes its output light through both the first 350 and second 340 lenses before reaching the eye 210; the combined optical power of the first 350 and second 340 lenses may be configured to create another incremental amount of wavefront curvature so that the eye/brain interprets light coming from the third waveguide 290 as coming from a second focal plane that is even closer inward toward the person from optical infinity than was light from the next waveguide up 280.

The other waveguide layers 300, 310 and lenses 330, 320 are similarly configured, with the highest waveguide 310 in the stack sending its output through all of the lenses between it and the eye for an aggregate focal power representative of the closest focal plane to the person. To compensate for the stack of lenses 320, 330, 340, 350 when viewing/interpreting light coming from the world 510 on the other side of the stacked waveguide assembly 260, a compensating lens layer 620 may be disposed at the top of the stack to compensate for the aggregate power of the lens stack 320, 330, 340, 350 below. Such a configuration provides as many perceived focal planes as there are available waveguide/lens pairings. Both the out-coupling optical elements of the waveguides and the focusing aspects of the lenses may be static (i.e., not dynamic or electro-active). In some alternative embodiments, either or both may be dynamic using electro-active features.

In some embodiments, two or more of the waveguides 270, 280, 290, 300, 310 may have the same associated depth plane. For example, multiple waveguides 270, 280, 290, 300, 310 may be configured to output images set to the same depth plane, or multiple subsets of the waveguides 270, 280, 290, 300, 310 may be configured to output images set to the same plurality of depth planes, with one set for each depth plane. This can provide advantages for forming a tiled image to provide an expanded field of view at those depth planes.

With continued reference to Figure 6, the out-coupling optical elements 570, 580, 590, 600, 610 may be configured to both redirect light out of their respective waveguides and to output this light with the appropriate amount of divergence or collimation for a particular depth plane associated with the waveguide. As a result, waveguides having different associated depth planes may have different configurations of out-coupling optical elements 570, 580, 590, 600, 610, which output light with a different amount of divergence depending on the associated depth plane. In some embodiments, the light extracting optical elements 570, 580, 590, 600, 610 may be volumetric or surface features, which may be configured to output light at specific angles. For example, the light extracting optical elements 570, 580, 590, 600, 610 may be volume holograms, surface holograms, and/or diffraction gratings. In some embodiments, the features 320, 330, 340, 350 may not be lenses; rather, they may simply be spacers (e.g., cladding layers and/or structures for forming air gaps).

In some embodiments, the out-coupling optical elements 570, 580, 590, 600, 610 are diffractive features that form a diffraction pattern, or "diffractive optical element" (also referred to herein as a "DOE"). Preferably, the DOE's have a sufficiently low diffraction efficiency so that only a portion of the light of the beam is deflected away toward the eye 210 with each intersection of the DOE, while the rest continues to move through a waveguide via TIR. The light carrying the image information is thus divided into a number of related exit beams that exit the waveguide at a multiplicity of locations and the result is a fairly uniform pattern of exit emission toward the eye 210 for this particular collimated beam bouncing around within a waveguide.

In some embodiments, one or more DOEs may be switchable between "on" states in which they actively diffract, and "off" states in which they do not significantly diffract. For instance, a switchable DOE may comprise a layer of polymer dispersed liquid crystal, in which microdroplets comprise a diffraction pattern in a host medium, and the refractive index of the microdroplets may be switched to substantially match the refractive index of the host material (in which case the pattern does not appreciably diffract incident light) or the microdroplet may be switched to an index that does not match that of the host medium (in which case the pattern actively diffracts incident light).

In some embodiments, a camera assembly 630 (e.g., a digital camera, including visible light and infrared light cameras) may be provided to capture images of the eye 210 and/or tissue around the eye 210 to, e.g., detect user inputs and/or to monitor the physiological state of the user. As used herein, a camera may be any image capture device. In some embodiments, the camera assembly 630 may include an image capture device and a light source to project light (e.g., infrared light) to the eye, which may then be reflected by the eye and detected by the image capture device. In some embodiments, the camera assembly 630 may be attached to the frame 80 (Figure 2) and may be in electrical communication with the processing modules 140 and/or 150, which may process image information from the camera assembly 630. In some embodiments, one camera assembly 630 may be utilized for each eye, to separately monitor each eye.

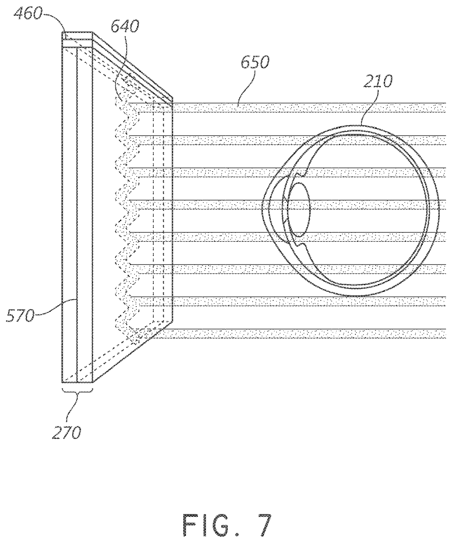

With reference now to Figure 7, an example of exit beams outputted by a waveguide is shown. One waveguide is illustrated, but it will be appreciated that other waveguides in the waveguide assembly 260 (Figure 6) may function similarly, where the waveguide assembly 260 includes multiple waveguides. Light 640 is injected into the waveguide 270 at the input surface 460 of the waveguide 270 and propagates within the waveguide 270 by TIR. At points where the light 640 impinges on the DOE 570, a portion of the light exits the waveguide as exit beams 650. The exit beams 650 are illustrated as substantially parallel but, as discussed herein, they may also be redirected to propagate to the eye 210 at an angle (e.g., forming divergent exit beams), depending on the depth plane associated with the waveguide 270. It will be appreciated that substantially parallel exit beams may be indicative of a waveguide with out-coupling optical elements that out-couple light to form images that appear to be set on a depth plane at a large distance (e.g., optical infinity) from the eye 210. Other waveguides or other sets of out-coupling optical elements may output an exit beam pattern that is more divergent, which would require the eye 210 to accommodate to a closer distance to bring it into focus on the retina and would be interpreted by the brain as light from a distance closer to the eye 210 than optical infinity.

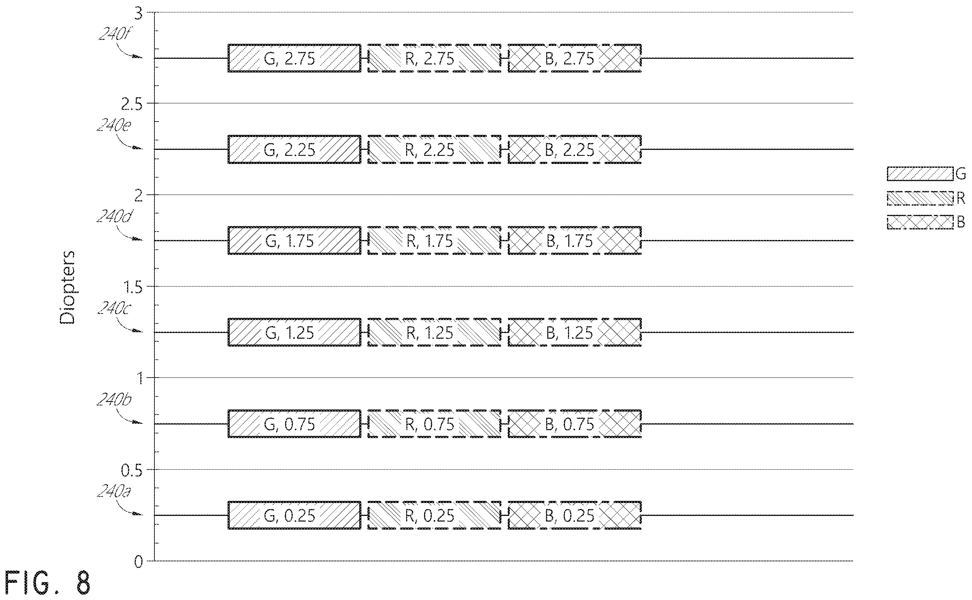

In some embodiments, a full color image may be formed at each depth plane by overlaying images in each of the component colors, e.g., three or more component colors. Figure 8 illustrates an example of a stacked waveguide assembly in which each depth plane includes images formed using multiple different component colors. The illustrated embodiment shows depth planes 240a - 240f, although more or fewer depths are also contemplated. Each depth plane may have three or more component color images associated with it, including: a first image of a first color, G; a second image of a second color, R; and a third image of a third color, B. Different depth planes are indicated in the figure by different numbers for diopters (dpt) following the letters G, R, and B. Just as examples, the numbers following each of these letters indicate diopters (1/m), or inverse distance of the depth plane from a viewer, and each box in the figures represents an individual component color image. In some embodiments, to account for differences in the eye's focusing of light of different wavelengths, the exact placement of the depth planes for different component colors may vary. For example, different component color images for a given depth plane may be placed on depth planes corresponding to different distances from the user. Such an arrangement may increase visual acuity and user comfort and/or may decrease chromatic aberrations.

In some embodiments, light of each component color may be outputted by a single dedicated waveguide and, consequently, each depth plane may have multiple waveguides associated with it. In such embodiments, each box in the figures including the letters G, R, or B may be understood to represent an individual waveguide, and three waveguides may be provided per depth plane where three component color images are provided per depth plane. While the waveguides associated with each depth plane are shown adjacent to one another in this drawing for ease of description, it will be appreciated that, in a physical device, the waveguides may all be arranged in a stack with one waveguide per level. In some other embodiments, multiple component colors may be outputted by the same waveguide, such that, e.g., only a single waveguide may be provided per depth plane.

With continued reference to Figure 8, in some embodiments, G is the color green, R is the color red, and B is the color blue. In some other embodiments, other colors associated with other wavelengths of light, including magenta and cyan, may be used in addition to or may replace one or more of red, green, or blue.

It will be appreciated that references to a given color of light throughout this disclosure will be understood to encompass light of one or more wavelengths within a range of wavelengths of light that are perceived by a viewer as being of that given color. For example, red light may include light of one or more wavelengths in the range of about 620-780 nm, green light may include light of one or more wavelengths in the range of about 492-577 nm, and blue light may include light of one or more wavelengths in the range of about 435-493 nm.

In some embodiments, the light source 530 (Figure 6) may be configured to emit light of one or more wavelengths outside the visual perception range of the viewer, for example, infrared and/or ultraviolet wavelengths. In addition, the in-coupling, out-coupling, and other light redirecting structures of the waveguides of the display 250 may be configured to direct and emit this light out of the display towards the user's eye 210, e.g., for imaging and/or user stimulation applications.

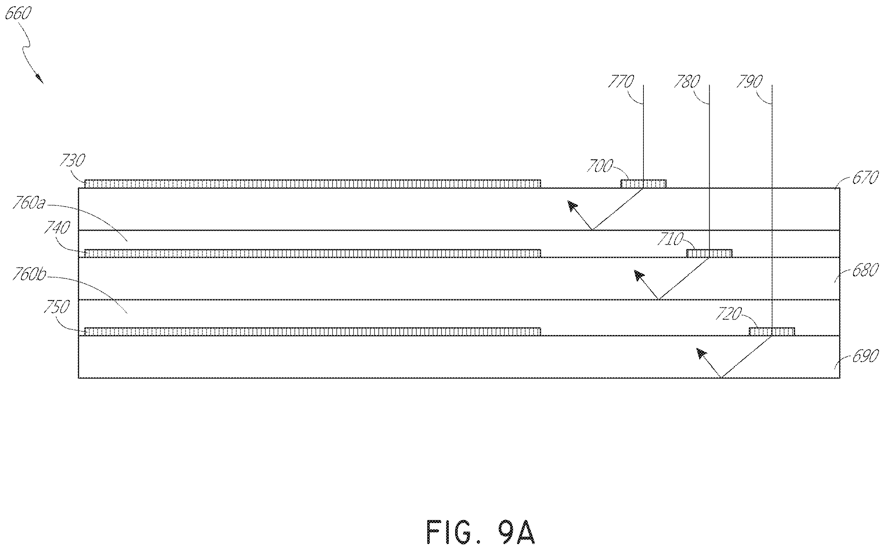

With reference now to Figure 9A, in some embodiments, light impinging on a waveguide may need to be redirected to in-couple that light into the waveguide. An in-coupling optical element may be used to redirect and in-couple the light into its corresponding waveguide. Figure 9A illustrates a cross-sectional side view of an example of a plurality or set 660 of stacked waveguides that each includes an in-coupling optical element. The waveguides may each be configured to output light of one or more different wavelengths, or one or more different ranges of wavelengths. It will be appreciated that the stack 660 may correspond to the stack 260 (Figure 6) and the illustrated waveguides of the stack 660 may correspond to part of the plurality of waveguides 270, 280, 290, 300, 310, except that light from one or more of the image injection devices 360, 370, 380, 390, 400 is injected into the waveguides from a position that requires light to be redirected for in-coupling.

The illustrated set 660 of stacked waveguides includes waveguides 670, 680, and 690. Each waveguide includes an associated in-coupling optical element (which may also be referred to as a light input area on the waveguide), with, e.g., in-coupling optical element 700 disposed on a major surface (e.g., an upper major surface) of waveguide 670, in-coupling optical element 710 disposed on a major surface (e.g., an upper major surface) of waveguide 680, and in-coupling optical element 720 disposed on a major surface (e.g., an upper major surface) of waveguide 690. In some embodiments, one or more of the in-coupling optical elements 700, 710, 720 may be disposed on the bottom major surface of the respective waveguide 670, 680, 690 (particularly where the one or more in-coupling optical elements are reflective, deflecting optical elements). As illustrated, the in-coupling optical elements 700, 710, 720 may be disposed on the upper major surface of their respective waveguide 670, 680, 690 (or the top of the next lower waveguide), particularly where those in-coupling optical elements are transmissive, deflecting optical elements. In some embodiments, the in-coupling optical elements 700, 710, 720 may be disposed in the body of the respective waveguide 670, 680, 690. In some embodiments, as discussed herein, the in-coupling optical elements 700, 710, 720 are wavelength selective, such that they selectively redirect one or more wavelengths of light, while transmitting other wavelengths of light. While illustrated on one side or corner of their respective waveguide 670, 680, 690, it will be appreciated that the in-coupling optical elements 700, 710, 720 may be disposed in other areas of their respective waveguide 670, 680, 690 in some embodiments.

As illustrated, the in-coupling optical elements 700, 710, 720 may be laterally offset from one another. In some embodiments, each in-coupling optical element may be offset such that it receives light without that light passing through another in-coupling optical element. For example, each in-coupling optical element 700, 710, 720 may be configured to receive light from a different image injection device 360, 370, 380, 390, and 400 as shown in Figure 6, and may be separated (e.g., laterally spaced apart) from other in-coupling optical elements 700, 710, 720 such that it substantially does not receive light from the other ones of the in-coupling optical elements 700, 710, 720.

Each waveguide also includes associated light distributing elements, with, e.g., light distributing elements 730 disposed on a major surface (e.g., a top major surface) of waveguide 670, light distributing elements 740 disposed on a major surface (e.g., a top major surface) of waveguide 680, and light distributing elements 750 disposed on a major surface (e.g., a top major surface) of waveguide 690. In some other embodiments, the light distributing elements 730, 740, 750, may be disposed on a bottom major surface of associated waveguides 670, 680, 690, respectively. In some other embodiments, the light distributing elements 730, 740, 750, may be disposed on both top and bottom major surface of associated waveguides 670, 680, 690, respectively; or the light distributing elements 730, 740, 750, may be disposed on different ones of the top and bottom major surfaces in different associated waveguides 670, 680, 690, respectively.

The waveguides 670, 680, 690 may be spaced apart and separated by, e.g., gas, liquid, and/or solid layers of material. For example, as illustrated, layer 760a may separate waveguides 670 and 680; and layer 760b may separate waveguides 680 and 690. In some embodiments, the layers 760a and 760b are formed of low refractive index materials (that is, materials having a lower refractive index than the material forming the immediately adjacent one of waveguides 670, 680, 690). Preferably, the refractive index of the material forming the layers 760a, 760b is 0.05 or more, or 0.10 or less than the refractive index of the material forming the waveguides 670, 680, 690. Advantageously, the lower refractive index layers 760a, 760b may function as cladding layers that facilitate total internal reflection (TIR) of light through the waveguides 670, 680, 690 (e.g., TIR between the top and bottom major surfaces of each waveguide). In some embodiments, the layers 760a, 760b are formed of air. While not illustrated, it will be appreciated that the top and bottom of the illustrated set 660 of waveguides may include immediately neighboring cladding layers.

Preferably, for ease of manufacturing and other considerations, the material forming the waveguides 670, 680, 690 are similar or the same, and the material forming the layers 760a, 760b are similar or the same. In some embodiments, the material forming the waveguides 670, 680, 690 may be different between one or more waveguides, and/or the material forming the layers 760a, 760b may be different, while still holding to the various refractive index relationships noted above.

With continued reference to Figure 9A, light rays 770, 780, 790 are incident on the set 660 of waveguides. It will be appreciated that the light rays 770, 780, 790 may be injected into the waveguides 670, 680, 690 by one or more image injection devices 360, 370, 380, 390, 400 (Figure 6).

In some embodiments, the light rays 770, 780, 790 have different properties, e.g., different wavelengths or different ranges of wavelengths, which may correspond to different colors. The in-coupling optical elements 700, 710, 720 each deflect the incident light such that the light propagates through a respective one of the waveguides 670, 680, 690 by TIR. In some embodiments, the incoupling optical elements 700, 710, 720 each selectively deflect one or more particular wavelengths of light, while transmitting other wavelengths to an underlying waveguide and associated incoupling optical element.

For example, in-coupling optical element 700 may be configured to deflect ray 770, which has a first wavelength or range of wavelengths, while transmitting rays 1242 and 1244, which have different second and third wavelengths or ranges of wavelengths, respectively. The transmitted ray 780 impinges on and is deflected by the in-coupling optical element 710, which is configured to deflect light of a second wavelength or range of wavelengths. The ray 790 is deflected by the in-coupling optical element 720, which is configured to selectively deflect light of third wavelength or range of wavelengths.

With continued reference to Figure 9A, the deflected light rays 770, 780, 790 are deflected so that they propagate through a corresponding waveguide 670, 680, 690; that is, the in-coupling optical elements 700, 710, 720 of each waveguide deflects light into that corresponding waveguide 670, 680, 690 to in-couple light into that corresponding waveguide. The light rays 770, 780, 790 are deflected at angles that cause the light to propagate through the respective waveguide 670, 680, 690 by TIR. The light rays 770, 780, 790 propagate through the respective waveguide 670, 680, 690 by TIR until impinging on the waveguide's corresponding light distributing elements 730, 740, 750.

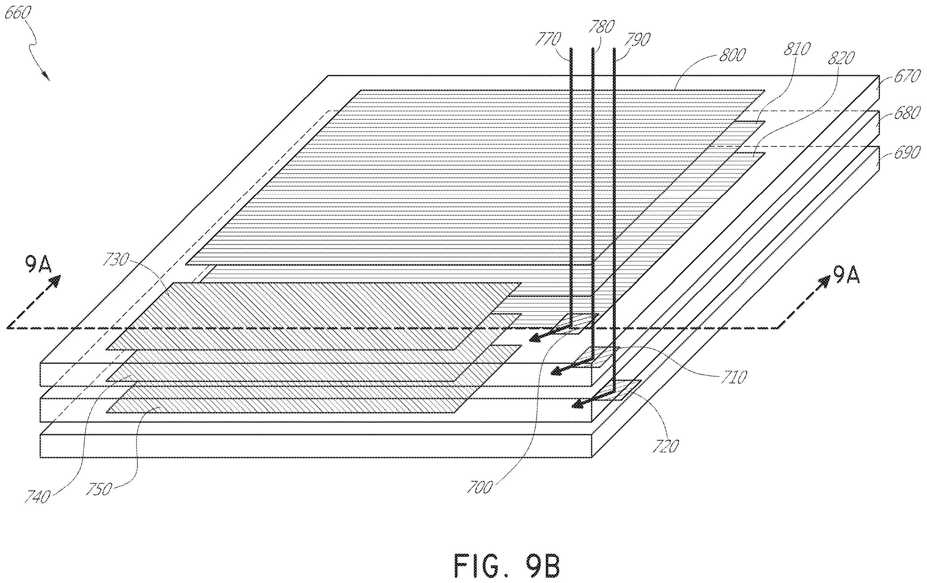

With reference now to Figure 9B, a perspective view of an example of the plurality of stacked waveguides of Figure 9A is illustrated. As noted above, the incoupled light rays 770, 780, 790, are deflected by the in-coupling optical elements 700, 710, 720, respectively, and then propagate by TIR within the waveguides 670, 680, 690, respectively. The light rays 770, 780, 790 then impinge on the light distributing elements 730, 740, 750, respectively. The light distributing elements 730, 740, 750 deflect the light rays 770, 780, 790 so that they propagate towards the out-coupling optical elements 800, 810, 820, respectively.

In some embodiments, the light distributing elements 730, 740, 750 are orthogonal pupil expanders (OPE's). In some embodiments, the OPE's deflect or distribute light to the out-coupling optical elements 800, 810, 820 and, in some embodiments, may also increase the beam or spot size of this light as it propagates to the out-coupling optical elements. In some embodiments, the light distributing elements 730, 740, 750 may be omitted and the in-coupling optical elements 700, 710, 720 may be configured to deflect light directly to the out-coupling optical elements 800, 810, 820. For example, with reference to Figure 9A, the light distributing elements 730, 740, 750 may be replaced with out-coupling optical elements 800, 810, 820, respectively. In some embodiments, the out-coupling optical elements 800, 810, 820 are exit pupils (EP's) or exit pupil expanders (EPE's) that direct light in a viewer's eye 210 (Figure 7). It will be appreciated that the OPE's may be configured to increase the dimensions of the eye box in at least one axis and the EPE's may be to increase the eye box in an axis crossing, e.g., orthogonal to, the axis of the OPEs. For example, each OPE may be configured to redirect a portion of the light striking the OPE to an EPE of the same waveguide, while allowing the remaining portion of the light to continue to propagate down the waveguide. Upon impinging on the OPE again, another portion of the remaining light is redirected to the EPE, and the remaining portion of that portion continues to propagate further down the waveguide, and so on. Similarly, upon striking the EPE, a portion of the impinging light is directed out of the waveguide towards the user, and a remaining portion of that light continues to propagate through the waveguide until it strikes the EP again, at which time another portion of the impinging light is directed out of the waveguide, and so on. Consequently, a single beam of incoupled light may be "replicated" each time a portion of that light is redirected by an OPE or EPE, thereby forming a field of cloned beams of light, as shown in Figure 6. In some embodiments, the OPE and/or EPE may be configured to modify a size of the beams of light.

Accordingly, with reference to Figures 9A and 9B, in some embodiments, the set 660 of waveguides includes waveguides 670, 680, 690; in-coupling optical elements 700, 710, 720; light distributing elements (e.g., OPE's) 730, 740, 750; and out-coupling optical elements (e.g., EP's) 800, 810, 820 for each component color. The waveguides 670, 680, 690 may be stacked with an air gap/cladding layer between each one. The in-coupling optical elements 700, 710, 720 redirect or deflect incident light (with different in-coupling optical elements receiving light of different wavelengths) into its waveguide. The light then propagates at an angle which will result in TIR within the respective waveguide 670, 680, 690. In the example shown, light ray 770 (e.g., blue light) is deflected by the first in-coupling optical element 700, and then continues to bounce down the waveguide, interacting with the light distributing element (e.g., OPE's) 730 and then the out-coupling optical element (e.g., EPs) 800, in a manner described earlier. The light rays 780 and 790 (e.g., green and red light, respectively) will pass through the waveguide 670, with light ray 780 impinging on and being deflected by in-coupling optical element 710. The light ray 780 then bounces down the waveguide 680 via TIR, proceeding on to its light distributing element (e.g., OPEs) 740 and then the out-coupling optical element (e.g., EP's) 810. Finally, light ray 790 (e.g., red light) passes through the waveguide 690 to impinge on the light in-coupling optical elements 720 of the waveguide 690. The light in-coupling optical elements 720 deflect the light ray 790 such that the light ray propagates to light distributing element (e.g., OPEs) 750 by TIR, and then to the out-coupling optical element (e.g., EPs) 820 by TIR. The out-coupling optical element 820 then finally out-couples the light ray 790 to the viewer, who also receives the out-coupled light from the other waveguides 670, 680.

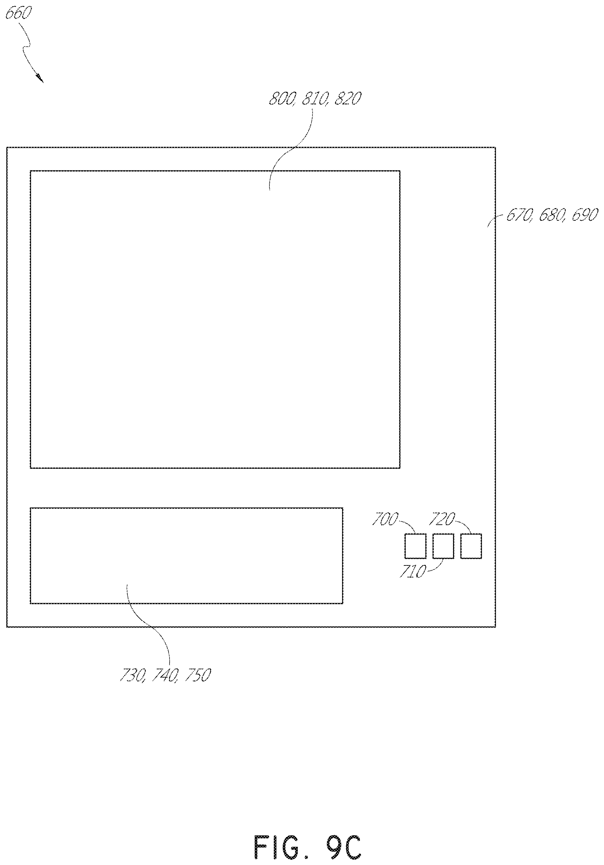

Figure 9C illustrates a top-down plan view of an example of the plurality of stacked waveguides of Figures 9A and 9B. As illustrated, the waveguides 670, 680, 690, along with each waveguide's associated light distributing element 730, 740, 750 and associated out-coupling optical element 800, 810, 820, may be vertically aligned. However, as discussed herein, the in-coupling optical elements 700, 710, 720 are not vertically aligned; rather, the in-coupling optical elements are preferably nonoverlapping (e.g., laterally spaced apart as seen in the top-down view). As discussed further herein, this nonoverlapping spatial arrangement facilitates the injection of light from different resources into different waveguides on a one-to-one basis, thereby allowing a specific light source to be uniquely coupled to a specific waveguide. In some embodiments, arrangements including nonoverlapping spatially-separated in-coupling optical elements may be referred to as a shifted pupil system, and the in-coupling optical elements within these arrangements may correspond to sub pupils.

### Variable Power Reflector

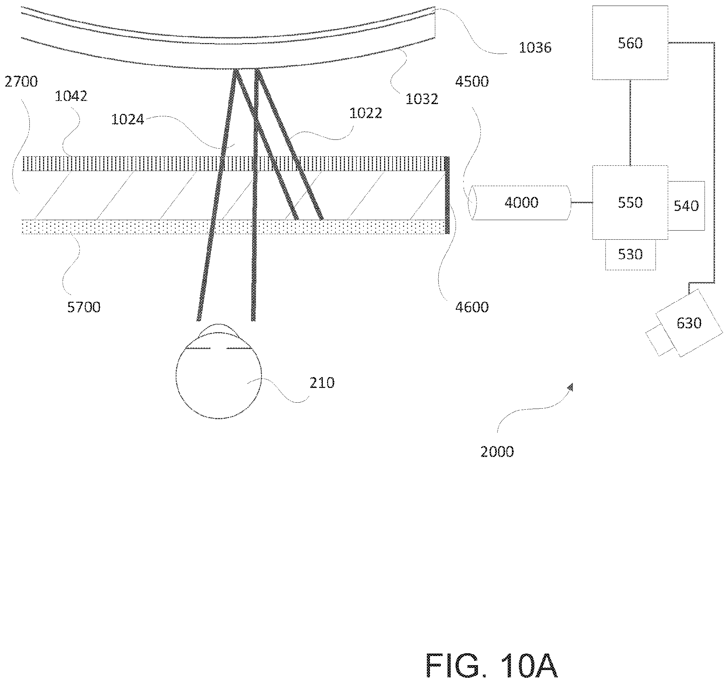

As illustrated in Figure 10A, the wearable augmented reality head-mounted display system 60 may include a variable power reflector (or variable focus reflector) 1032 disposed to receive light from the light projector system 2000, e.g., via the waveguide 2700. The variable power reflector 1032 may be configured to have an optical power that is adjustable upon application of an electrical signal. For example, the variable power reflector 1032 shown in Figure 10A comprises a deformable reflector having a deformable reflective surface (e.g., surface closest to waveguide 2700) having a shape that is adjustable. For example, the shape of the deformable reflector 1032 may be configured to bend to produce different convex shapes corresponding to different optical power. The variable power reflector 1032, may for example, comprise a deformable membrane or other thin member that is flexible and can vary its shape. In some designs, the deformable reflector 1032 is electrically actuated. The deformable reflector may, for example, include at least one electrode 1036 to apply an electric field to deform the reflective surface possibly via electro-static forces or by some other. As illustrated in Figure 10A, another electrode 1042 is included on the surface of the waveguide 2700. Application of a voltage across the two electrodes 1036 and 1042 may provide such an electric field and may thus cause the deformable reflector to deform. With deformation of the deformable membrane or member, the reflective surface (e.g., surface closest to the waveguide 2700) may be deformed. As illustrated, the shape can be convex and thus provide a reflective surface having negative optical power. Although in some examples the surface closest to the waveguide 2700 may comprise a reflective surface for reflecting light from the light projection system (display) 2000, other surfaces associated with the variable power reflector may reflect light from the light project system. The variable power reflector 1032 may, for example, include multiple layers that include one or more reflective surface that need not be the surface closest to the light guide 2700. The variable power reflector 1032 may be wavelength selective and/or polarization selective such that light having certain wavelengths and/or polarization states are reflected by the variable power reflector 1032 while light having other wavelengths and/or polarization states are transmitted through the variable power reflector 1032.

The waveguide 2700 may have a forward side and a rearward side with the rearward side being closest (more proximal) to the eye of the wearer and the forward side being farther (or more distal) to the eye of the wearer and closer to the world in front of the wearer and the head mounted display system. As illustrated the variable power reflector 1032 may be disposed on a forward side of the waveguide. The waveguide may include outcoupling elements configured to extract light from the waveguide and direct this light toward the forward side of the waveguide so as to be incident on the variable power reflector. Since the variable power reflector is disposed on the forward side of the waveguide, the variable power reflector is configured to transmit light from the world forward the wearer such that the head-mounted display system can pass light from the world forward a wearer wearing the head-mounted system into an eye of the wearer. Despite being transmissive to light from the world forward the wearer, the variable power reflector 1032 is configured to reflect light from said display. As discussed below, in some examples, the variable power reflector may include one or more wavelength selective filters to reflect light from the light projection system (display) 2000 while transmitting light from the world forward the wearer. Additionally, in some examples, the variable power reflector may include one or more polarization selective filters to reflect light from the light projection system (display) 2000 while transmitting light from the world forward the wearer.

As illustrated, the variable power reflector may be caused to deform its shape to cause light from the display 2000 that is reflected from the variable power reflector to diverge. In particular, light from the light source 530 is being directed by the beam splitter 550 to the spatial light modulator 540 and to an image injection device 4000 disposed with respect to the waveguide 2700 to couple spatially modulated light containing an image into the waveguide. This light 1022 may propagate through the waveguide 2700 by total internal reflection (TIR) and be extracted therefrom via one or more outcoupling optical elements (e.g., an exit pupil expander comprising, for example, diffractive features). In some configurations, the light from the display 2000 that is injected into the waveguide 2700 may be collimated and thus collimated light 1022 may exit the waveguide and propagate toward the variable power reflector 1032 as illustrated in Figure 10A. In the example shown in Figure 10A, the variable power reflector (or variable focus reflector) is deformed so as to create a convex reflective surface that produces a negative optical power (e.g., produces a virtual image at a distance from the eye 210), thus causing reflected light rays 1024 to diverge. The reflected light 1024 may then enter the eye 210 of an individual (e.g., a wearer) and appear to be formed by an object a short distance from the eye on the other side of the waveguide and deformable mirror. As a result, the image formed by the display may appear to originate from an object relatively close to the wearer.

In the example shown in Figure 10A, light exits the image injection device 4000 and is injected into an input surface 4600 of the waveguide 2700 that is on the edge of waveguide 2700. In other examples, however, the light may be injected into a major surface of the corresponding waveguide (e.g., one of the waveguide surfaces directly facing the world 144 or the viewer's eye 210). See, for example, Figures 9A-9C. In various embodiments, light from the image injection device 4000 can be polarized prior to being injected into the waveguide 2700. For example, the light injected into the waveguide 2700 can be configured to be linearly polarized along the vertical (or horizontal) direction.

In certain configurations, the one or more outcoupling optical elements 5700 may be configured to direct substantially all outcoupled light in a distal direction from the eye of the viewer, e.g. towards the world. The one or more outcoupling optical elements 5700 may include one or more asymmetrical diffraction gratings.

Although the variable power reflector 1032 may be disposed so as to reflect light outcoupled in a distal direction from the eye 210 of the user back towards the eye 210 of the user potentially altering the wavefront of the light reflected therefrom, the variable power reflector transmits light from the world in front of the wearer to the user's eye without introducing similar changes to the wavefront. For example, although the variable power reflector may be configured have optical power that acts on light from the display 2000 that is reflected from the variable power reflector, the variable power reflector may not similarly act on the light from the world in front of the wearer that is transmitted therethrough to the eye. In some cases, for example, the thickness of the variable power reflector 1032 may be chosen sufficiently low so as not to significantly alter the optical properties of light passing through the variable power reflector 1032 (e.g., from the world). Advantageously, this may allow for light passing through the variable power reflector 1032 from the world to be observed at the proper depths while controlling the depths at which images from the display 2000 appear to be originating. This configuration may therefore exclude any additional lenses to compensate for a change in the radius of curvature or optical power of the variable power reflector for light from the world in front of the wearer, and accordingly make the system lighter, cheaper and less complex.

The reflector 1036 may be comprised of one or more transparent materials, such as, for example, silicon mononitride (SiN). The material at the appropriate thickness may also be sufficiently flexible to be deformed, for example, by electrostatic forces with application of an electric field. Other methods of deforming the variable power reflector may be used. Similarly, as discussed below, other ways of providing for variable optical power different from deforming the shape of the reflector may also be employed.

In some embodiments, the resiliency of the variable power reflector 1032 allows for rapid temporal transitions among one or more optical powers. For example, rapid transitions from one focal length (e.g., curvature) to another may allow for a time-multiplexing of different focal planes as seen by a viewer (e.g., the eye 210). In some embodiments, transitions may toggle between two or more focal lengths many times a minute.

As discussed above, in some cases, the curvature of the variable power reflector 1032 is controlled by two or more electrodes. Although a distal electrode 1036 may be disposed on a distal side of the variable power reflector 1032, as illustrated by Figure 10A, and a proximal electrode 1042 may be disposed proximal to the reflector 1032 (e.g., disposed on the waveguide 2700, as shown In Figure 10A), other electrode configuration are possible. The distal electrode 1036 may be disposed on a proximal side of the variable power reflector 1032. The electrodes 1036, 1042 may be comprised of a material that can conduct electricity and that is transparent to visible light. One or more materials may be used for the electrodes 1036, 1042, such as, for example, indium tin oxide (ITO).

The electrodes may be in electrical communication with electronics configured to drive the variable power reflector. These electronics may be configured to change the optical power of the variable optical power reflector so as to present different image content as if originating from different depth planes. In certain configurations, for example, the controller 560 or other electronics controls the operation the variable power reflector and may control, in conjunction, one or more of the waveguide 2700 (e.g., stacked waveguide assembly of Figure 6) and/or other parts of the light projector system 2000 (e.g., the image injection device 4000, the light source 530, the light modulator 540, the camera assembly 630). In some cases, the controller 560 regulates the timing and provision of image information to the waveguide 2700 and thus to the variable power reflector and also controls the timing of the actuation or variation in optical power of the variable power reflector and synchronization therebetween.

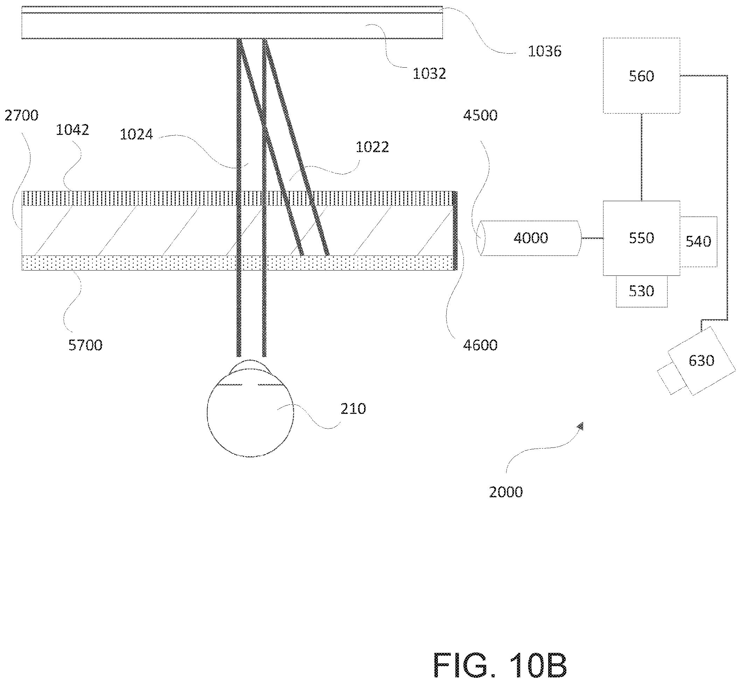

Accordingly, the variable power reflector (or the variable focus reflector) 1032 may have optical power that is adjustable and that can be controlled electronically. This capability allows the depth plane corresponding to image outcoupled from the waveguide 2700 to be dynamically adjusted. For example, the light outcoupled from the waveguide 2700 may be substantially collimated, as if the object generating the light is located at an infinite distance (or at least far) from the viewer. If the desired focal plane corresponding to the variable power reflector (or the variable focus reflector) in at an infinite distance, the reflector 1032 can be set in a planar state so as, in this case where collimated light is output from the waveguide, to leave the wavefront curvature of the reflected light substantially unchanged. This situation is shown in Figure 10B. Alternatively, if the desired focal plane is closer to the viewer than infinity, the variable power reflector 1032 may be adjusted (e.g., flexed, electrically influenced) to assume an appropriate amount of convex curvature. This mode is shown in Figure 10A.

Accordingly, Figure 10B illustrates the light projection system 2000 of Figure 10A where the variable power reflector 1032 creates virtual images as if at infinity. The light rays 1022 exit the waveguide 2700 parallel or substantially parallel to each other and propagate toward the variable power reflector 1032. Because the electrodes 1036, 1042 have caused the reflector 1032 to have a flat reflective surface, the reflected light rays 1024 are also parallel to each other as they propagate toward the eye 210. In some embodiments, like in Figure 10A, the variable power reflector 1032, the waveguide 2700, and the outcoupling optical element 5700 are configured not to substantially alter the degree of divergence of the light 1024.

As discussed above, the variable power reflector may be configured to reflect light from the display 2000 while transmitting light from the world forward the wearer. For example, the variable power reflector may include wavelength selective filters to reflect light from the display while transmitting light from the world forward the wearer. In some designs, for example, the variable power reflector 1032 comprises one or more wavelength selective filters (e.g., notch filters, band-pass filters) corresponding to one or more colors or combinations of colors. For example, one or more notch filters may be tuned to reflect light at a range of wavelengths corresponding to the color green (e.g., a narrow band within the range between 520 - 560 nm), the color red (e.g., a narrow band within the range between 635 nm - 700 nm), and/or the color blue (e.g., a narrow band within the range between 450 nm - 490 nm), while allowing light to be transmitted through the reflector 1032 at other visible wavelengths. Because it may be advantageous to allow most visible wavelengths of light passed through the reflector (e.g., from the "world"), the one or more wavelength selective filters can be tuned to reflect only a narrow range of visible wavelengths. For example, the reflector may comprise one or more notch filters each configured to reflect a band of wavelengths encompassing a range of between about 0.1 nm and 2 nm, between about 1 and 5 nm, between about 2 nm and 8 nm, between about 5 nm and 10 nm, and/or between about 10 and 25 nm. Any range formed by any of these values is possible. Other size bands are also possible.

The narrow bands in the visible spectrum where the variable power reflector is reflective may coincide with the color of light emitted by the display 2000. The display, for example, may comprise one or more light sources (e.g., LEDs or lasers) that emit light of a particular color. The narrow band reflected by the variable power reflector may overlap and/or coincide with the color and wavelengths emitted by these light sources in the display.

Although the spectral transmission of the variable power reflector 1032 reflects light having a wavelength within these narrow bands, light outside these bands may be transmitted. Accordingly, much of the ambient visible light from the world forward the wearer and the head-mounted display is transmitted through the variable power reflector. To provide such reflectivity characteristics, the variable power reflector may include one or more reflective layers. For example the variable power reflector may include a plurality of layers having different spectral reflectivity.

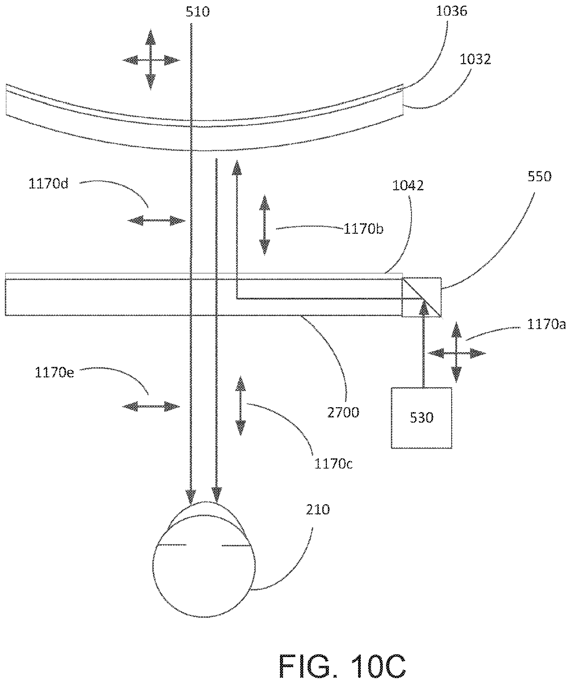

Similarly, the variable power reflector may include one or more polarization selective filters to reflect light from the display while transmitting light from the world forward the wearer. Figure 10C, for example, illustrates a variable power reflector 1032 that is polarization selective and that uses the polarization of light to determine what light is reflected and what light is transmitted. In this example, the variable power reflector is configured to reflect one polarization state and transmits another polarization state. In particular, the variable power reflector is configured to reflect one linear polarization state (vertical) and transmits another linear polarization state (horizontal). As shown in Figure 10C, the light source 530 in the display emits light 1170a with both horizontal and vertical polarization. The light 1170b output from the waveguide by the output coupling elements, however, is shown as vertically polarized. The variable power reflector 1032, in this example, is be configured to reflect vertically polarized light. As shown, the vertically polarized light 1170b is reflected by the reflector 1032. The light 1170c from the display 2000 entering the eye 210 may thus be vertically polarized. As discussed above, the variable power reflector may be wavelength selective in addition to being polarization selective.

In contrast, in the example shown in Figure 10C, light from the world 510 may comprise both vertically and horizontally polarized light. If the variable power reflector 1032 is configured to transmit horizontally polarized light and/or reflect (and/or absorb) vertically polarized light, horizontally polarized light 1170d may successfully pass (e.g., transmit) through the reflector 1032 without corresponding vertically polarized light. As such, the light 1170e from the world in front of the wearer entering the eye 210 may be horizontally polarized.

In this manner, the variable power reflector may both reflect light from the display 2000 as well as pass visible light from the world in front of the wearer and the head-mounted display. Other techniques, however, may be employed.

For example, in some embodiments, the waveguide 2700 can comprise a liquid crystal grating. The liquid crystal grating can comprise a cholesteric liquid crystal (CLC) layer having a plurality of liquid crystal molecules that are arranged to have successive azimuthal twists of the director as a function of position in the film in a layer normal direction, or a layer depth direction, of the liquid crystal layer. As described herein, the liquid crystal molecules that are arranged to have the successive azimuthal twists are collectively referred to as a chiral structure. As described herein, an angle (ϕ) of azimuthal twist or rotation is described as the angle between the directors the liquid crystal molecules, relative to a direction parallel to the layer normal. The spatially varying director of the liquid crystal molecules of a chiral structure can be described as forming a helical pattern in which the helical pitch (p) is defined as the distance (e.g., in the layer normal direction of the liquid crystal layer) over which the director has rotated by 360°, as described above. The liquid crystal grating can be configured as a diffraction grating as discussed below

Without being bound to any theory, under a Bragg-reflection condition, the wavelength of the incident light (λ) may be proportional to the mean or average refractive index (n) of a CLC layer and to the helical pitch (p), and can be expressed as satisfying the following condition under some circumstances: $λ ≅ np$ [1]

Thus, by controlling the pitch p of the liquid crystal molecules, different ones of the switchable reflective elements can be tuned to reflect different wavelengths. In addition, the bandwidth (Δλ) of Bragg-reflecting wavelengths may be proportional to the birefringence Δn (e.g., the difference in refractive index between different polarizations of light) of CLC layer and to the helical pitch (p), and can be expressed as satisfying the following condition under some circumstances: $Δλ = Δ n \cdot p$ [2]

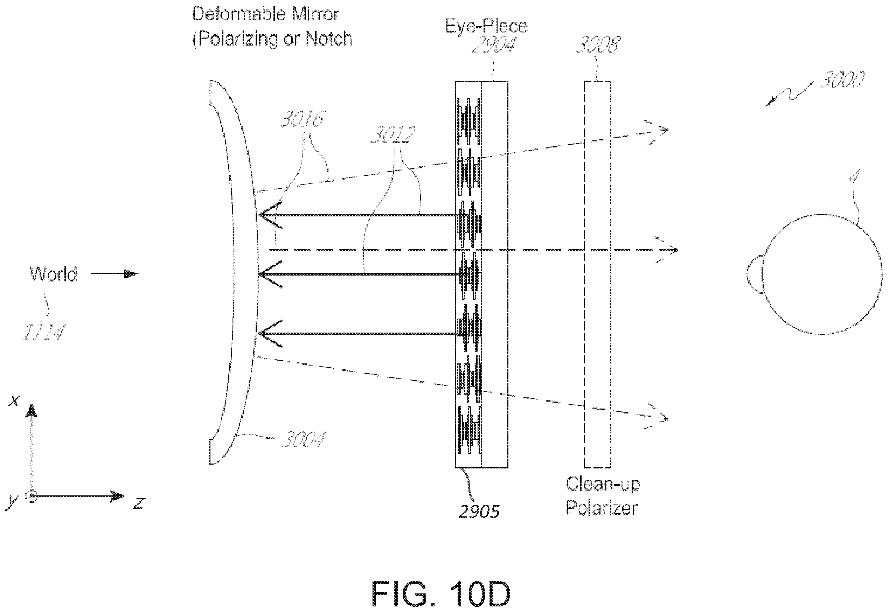

Figure 10D illustrates an implementation of a display device 3000 configured to output image information to a user using a waveguide assembly 2904 and a deformable mirror 3004. The display device 3000 comprises a waveguide assembly 2904, where the waveguide assembly 2904 is interposed between a curved or deformable mirror 3004 (so that it has optical power) and an optional clean-polarizer 3008. The waveguide assembly 2904 comprises a cholesteric liquid crystal diffraction grating (CLCG) 2905. The CLCG 2905 can be disposed between the waveguide assembly 2904 and the deformable mirror 3004 in some implementations. The waveguide assembly can comprise one or more waveguides configured to propagate light via total internal reflection. The eyepiece 2904 may be configured to asymmetrically project light, in this example, toward the left (world-ward) rather than to the right (eye-ward). The eyepiece 2904 may comprise DOEs, metamaterials, holograms, etc. that can preferentially project light in the desired, asymmetric direction and/or desired polarization state (e.g., linear or circular). Although, not illustrated, the display device 3000 can comprise an image injection device similar to the image injection device 4000 discussed above with reference to Figures 10A - 10C.

In operation, some of the light propagating in the x-direction within one or more waveguides within the waveguide assembly 2904 may be redirected, or out-coupled, in the z-direction as a light beam 3012 having a uniform circular polarization (e.g., RHCP). The waveguide assembly 2904 projects the light beam 3012 of a virtual image toward the curved or deformable mirror 3004 (in the opposite to side of the user's eye 4). In some embodiments, the deformable mirror 3004 is coated with a polarizing reflection layer (e.g., multi-layer linear polarization reflectors or broadband cholesteric liquid crystal circular polarization reflectors) to reflect light having a designated polarization, e.g., light having the same polarization as the out-coupling polarization of the CLCGs, and to allow light from the real world 1114 transmitted toward the eye 4. In some other embodiments, instead of a polarizing reflection layer, the deformable mirror 3004 is coated with a notch reflection layer or CLC reflection layer, which is designed to reflect light within a narrow bandwidth Δλ that matches the virtual image bandwidth of the out-coupled light from the waveguide assembly 2904. In some embodiments, a cleanup polarizer 3008 can be placed as shown in Figure 10D to eliminate any ghost images without going through the deformable mirror.

Although in the various examples shown in Figures 10A-10D, a single waveguide 2700 or a waveguide assembly 2904 is shown, a stack of waveguides may be used for outputting image information to user (e.g., as shown in Figure 6). In certain designs, different waveguide in the stack may correspond to a particular color (e.g., range of wavelengths) and/or depth plane of the display. Similarly, the image injection device 4000, the waveguide 2700, the waveguide assembly 2904 and other elements of the assembly may represent multiple image injection devices, waveguides, etc., respectively. For example, the image injection device 4000 can be a discrete display that produces image information for injection into a corresponding waveguide 2700. In some cases, the image injection device 4000 may comprise an output end of a single multiplexed display which may, e.g., pipe image information via one or more optical conduits (e.g., fiber optic cable) to the image injection device 4000. The image information provided by the image injection device 4000 may include light of different wavelengths, or colors (e.g., different component colors and/or subcolors). Additional information on a stacked waveguide assembly such as one used for waveguide 2700 or waveguide assembly 2904 may be found above in connection with Figure 6.

As discussed above, the outcoupling elements 5700 discussed above with reference, e.g., to Figures 10A and 10B, can be asymmetrical such that the amount of light injected in to the waveguide 2700 from the image injection device 4000 that is directed by the outcoupling elements 5700 towards the forward side of the waveguides and toward the reflector 1032 is greater than the amount of light injected in to the waveguide 2700 from the image injection device 4000 that is directed by the outcoupling elements 5700 towards the rearward side of the waveguide 2700 and the eye 210 of the user. For example, greater than 50% of the light injected into the waveguide 2700 can be directed by the outcoupling elements 5700 towards the reflector 1032. In various embodiments, the amount of injected light that is directed towards the reflector 1032 by the outcoupling elements can be greater than 60%, greater than 70%, greater than 80%, greater than 90%, greater than 95% and/or any other percentage between about 50% and about 99.9%. Embodiments of the outcoupling elements 5700 that can be configured to asymmetrically diffract light such that more light is diffracted in one direction than in another direction can include liquid crystal polarization gratings, volume phase holograms and/or metasurfaces. As discussed above, light injected into the waveguide 2700 that is directed towards the reflector 1032 and to the user's eye 210 can have the benefit of being focus modulated by the reflector 1032 (the wavefront of light can be changed for example such that the light appears to come from an object at another depth). Thus, it can beneficial in some cases if most, e.g., all or substantially all, light injected into the waveguide 2700 is directed towards the reflector 1032.

However, in some embodiments of the display device, most of the light injected into the waveguide 2700 from the image injection device 4000 may not be directed towards the reflector 1032 by the outcoupling elements 5700. In some such embodiments, some of the injected light may be directed towards the user's eye 210. In some such embodiments, a light recycling system such as a polarization based light recycling system comprising an arrangement of retarders (e.g., retarder layers) can be used to recycle the light that is directed towards the user's eye 210 by the outcoupling elements 5700 such that it is directed towards the reflector 1032 to be focus modulated before being incident on the user's eye 210.

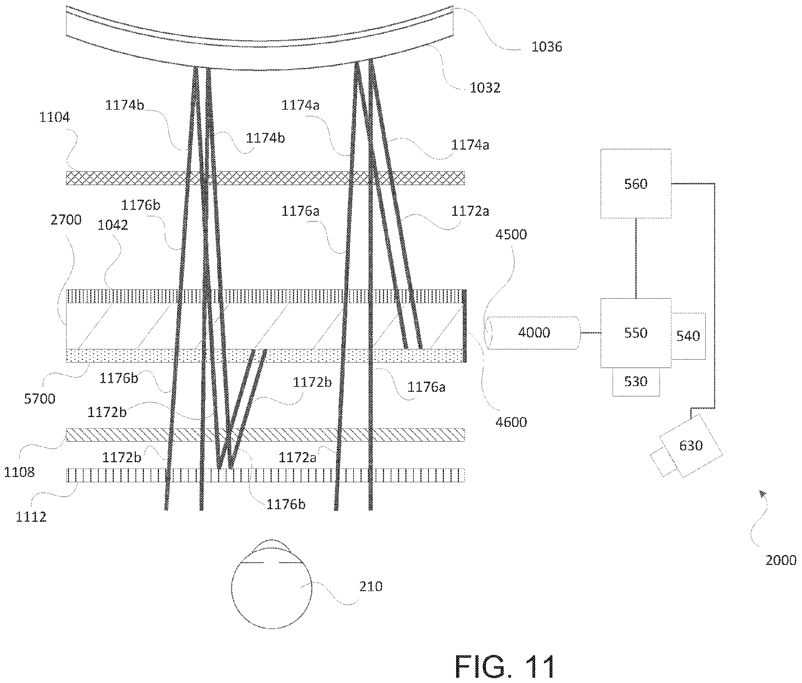

Figure 11 illustrates an embodiment of a display device including a light recycling system, namely a polarization based light recycling system, comprising an arrangement of retarders that are configured to redirect injected light from the waveguide that is outcoupled towards the user's eye 210 towards the reflector 1032. In various embodiments, the arrangement of retarders includes a quarter-wave retarder or quarter-wave plate 1104, which converts linearly polarized light into circular or elliptically polarized light and vice-versa, disposed between the waveguide 2700 and the reflector 1032 and a half-wave retarder or half-wave plate 1108, which is configured to shift (e.g., rotate) the direction of polarization of linearly polarized light, disposed between the waveguide 2700 and the user's eye 210. In various embodiments, the quarter-wave plate 1104 and/or the half-wave plate 1108 can be rigid structures. In some embodiments, the quarter-wave plate 1104 and/or the half-wave plate 1108 can be flexible structures (e.g., films). In some cases, one or more elements or layers having a desired net retardance, such as a net retardance of a quarter of a wavelength (λ/4) or a net retardance of a half of a wavelength (λ/2), can be used. The display device illustrated in Figure 11 further includes a polarization selective reflector 1112 disposed between the half-wave plate 1108 and the user's eye 210. In various embodiments, the polarization selective reflector 1112 can comprise a wavelength selective component (e.g., a notch filter) or reflective liquid crystal device. In various embodiments, the polarization selective reflector 1112 can comprise a metasurface. Embodiments of the polarization selective reflector 1112 comprising a wavelength selective component, a reflective liquid crystal component and/or a metasurface can be configured to reflect light having certain characteristics (e.g., a narrow band of wavelengths and/or specific polarization states) and transmit light not having those certain characteristics.

Consider a portion of light injected into the waveguide 2700 that is outcoupled by the outcoupling optical elements 5700 towards the reflector 1032 as beam 1172a. The beam 1172a is incident on the quarter-wave (λ/4) plate that converts the polarization state of the beam 1172a from linear to circular/elliptical polarization or vice-versa. Thus, the beam 1174a that is output from the quarter-wave plate 1104 has circular/elliptical polarization if the beam 1172a is linearly polarized (or vice-versa). The beam 1174a is reflected by the reflector 1032 and undergoes focus modulation as discussed above with reference to Figures 10A and 10B. The focus modulated reflected beam 1174a passes through the quarter-wave plate 1104 and undergoes a polarization shift from circular/elliptical to linear (or vice-versa). The polarization state of the beam 1176a that is output from the quarter-wave plate 1104 is orthogonal to the polarization state of the beam 1172a. As the beam 1176a traverses the half-wave (λ/2) plate 1108, the direction of polarization is shifted (or rotated). Thus, the beam 1178a that exits the half-wave plate 1108 has a polarization state that is orthogonal to the polarization state of the beam 1176a. The polarization state of the beam 1178a is identical to the polarization state of beam 1172a. The polarization selective reflector 1112 can be configured to transmit light having the polarization state of beam 1178a (or the polarization state of the beam 1172a) and can reflect light having a polarization state that is orthogonal to the polarization state of beam 1178a (or 1172a).

Consider a portion of light injected into the waveguide 2700 that is outcoupled by the outcoupling optical elements 5700 towards the user's eye 210 as beam 1172b. The beam 1172b is incident on the half-wave plate 1108 that shifts (or rotates) the direction of polarization of the beam 1172b. For example, if beam 1172b is linearly polarized along the vertical direction, then beam 1176b that exits from the half-wave plate is linearly polarized along the horizontal direction. As discussed above, the polarization selective reflector 1112 is configured to transmit light having the polarization state of beam 1172b and reflect light that is orthogonal to the polarization state of beam 1172b. Accordingly, beam 1176b having a polarization state that is orthogonal to the polarization state of 1172b is reflected by the polarization selective reflector 1112 towards the reflector 1032. The direction of the polarization state of the beam 1176b is shifted (e.g., rotated) as it traverses the half-wave plate 1108. Thus, the beam 1178b has the same polarization state as the beam 1172b. The polarization state of the beam 1178b is converted from linear polarization to circular/elliptical polarization as it traverses through the quarter-wave plate 1104. Thus, beam 1174b that exits from the quarter-wave plate 1104 is circularly/elliptically polarized and is reflected by the reflector 1032. The beam reflected from the reflector 1032 is focus modulated and undergoes a shift in polarization from circularly/elliptically polarized to linear polarization as it traverses through the quarter-wave plate 1104. The beam 1180b that exits the quarter-wave plate 1104 has a polarization that is orthogonal to the beam 1178b. For example, if the beam 1178b (or the beam 1172b) is linearly polarized along the vertical direction, then the beam 1180b is linearly polarized along the horizontal direction. The direction of the polarization state of the beam 1180b is shifted (or rotated) as it traverses through the half-wave plate 1108. For example, if the beam 1180b is linearly polarized along the horizontal direction, then the beam 1182b is linearly polarized along the vertical direction. The beam 1182b has the same polarization state as the polarization state of the beam 1172b. The polarization selective reflector 1112 is configured to transmit the focus modulated beam 1182b towards the user's eye 210.

As discussed above, the reflector 1032 can comprise coatings that are configured to reflect light in a narrow band of (visible) wavelengths while transmitting light outside the narrow band of (visible) wavelengths. For example, the reflector 1032 can be configured to reflect light in a narrow range of wavelengths of red, green and/or blue. As another example, the reflector 1032 can be configured to reflect light in a wavelength range of about 5-10 nm around a red center wavelength, for example, 630 nm. As yet another example, the reflector 1032 can be configured to reflect light in a wavelength range of about 5-10 nm around a green center wavelength, such as for example, 550 nm. As another example, the reflector 1032 can be configured to reflect light in a wavelength range of about 5-10 nm around a blue center wavelength such as for example 470 nm. In various embodiments, the reflector 1032 can be configured to reflect light in a wavelength range of about 5-20 nm around a central wavelength in the visible spectral range. In various designs, these narrow wavelength bands may overlap and/or coincide with the wavelengths emitted by the light sources of the display 2000. The display 2000, for example, may include a plurality of color light sources and the narrow band regions of reflectivity of the variable power reflector may coincide or overlap with the color of light emitted by the light sources. For instance, for the example cited above, the light sources in the display 2000 may emit red light that is centered about 630 nm or within 5-10 nm thereof, green light that is centered about 550 nm or within 5-10 nm thereof, and blue light that is centered about 470 nm or within 5-10 nm thereof. Different designs may have light sources and reflector filters having different spectral characteristics, however, in various cases, the wavelength emitted by the light source and the wavelengths reflected by the variable power reflector overlap or coincide while many other visible wavelengths are not reflected and transmit through the variable power reflector. If many other visible wavelengths are transmitted, much of the light from objects forward the wearer and the head mounted display will be visible to the viewer through the head mounted display

Also as discussed above, the variable power reflector can comprise a polarization selective reflector to selectively reflect light from the display 2000 while transmitting light from objects forward the wearer and the head mounted display. In some designs, for example, the reflector 1032 can be configured to comprise a polarization selective reflector that is configured to reflect light of a specific polarization. For example, the reflector 1032 can be configured to reflect light having particular polarization state while being transmissive to other polarization states, in some cases, many, most, all, or substantially all other polarization states.

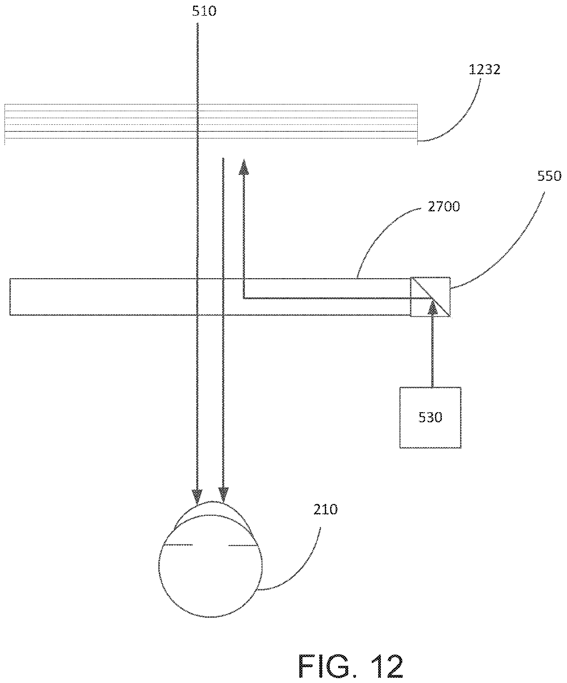

**In** certain designs, the variable power reflector can comprise one or more switchable optical elements such as a stack or a plurality of switchable reflective elements 1232 as depicted in Figure 12. Such switchable elements may be configured to switch between two states such as two levels of reflection, for example, a low level of reflection (0% or more) or a higher level of reflection. Similarly, the switchable elements may be configured to switch between two levels of transmission, for example, a low level of transmission (0% or more) or a higher level of transmission. Such switchable optical elements may comprise for example switchable reflectors, switchable diffractive optical elements such as switchable diffractive reflectors or switchable reflective gratings or holographic optical elements. The switchable optical elements may be configured to switch between two power levels such as a low power lever (0 Diopters or higher magnitude) and a higher power level. These power levels may be positive or negative and may switch between two positive powers, two negative power or a positive power and a negative power or a zero power and a non-zero power. Such switchable optical elements may comprise, for example, switchable diffractive optical elements such as switchable diffractive optical lenses.

**In** various cases, one or more switchable optical elements comprise one or more liquid crystal elements comprising liquid crystal such as a switchable polymer dispersed liquid crystal element. The switchable optical elements may comprise a switchable polarization grating. In certain configurations, the variable power reflector comprises a stack of switchable optical elements wherein different of said switchable optical elements are associated with different optical powers such that said switchable optical element can switch between different optical powers. These optical powers may be provided, for example, by lenses such as diffractive lenses.

In the example illustrated in Figure 12, different of the plurality of switchable reflective elements have a negative optical power (although one or more the optical powers could be positive or zero in different designs). For example, the plurality or stack of switchable reflective elements can have a first switchable reflective element having a first negative optical power, a second switchable reflective element having a second negative optical power, a third switchable reflective element having a third negative optical power, ..., a n^{th} switchable reflective element having a n^{th} negative optical power. In certain configurations, one of the first, second, third, ..., or the n^{th} switchable reflective element can be configured to reflect light outcoupled from the waveguide 2700 while the remaining switchable reflective elements can be configured to be transmissive. In this manner, light outcoupled from the waveguide 2700 that is directed away from the user's eye 210 is reflected from the selected one of the first, second, third, ..., or the n^{th} switchable reflective element such that it appears to originate from a certain depth plane to the user. In various embodiments, each of the plurality of switchable reflective elements can be configured to reflect specific wavelengths of light such that the specific wavelengths of light appear to originate from a particular depth.

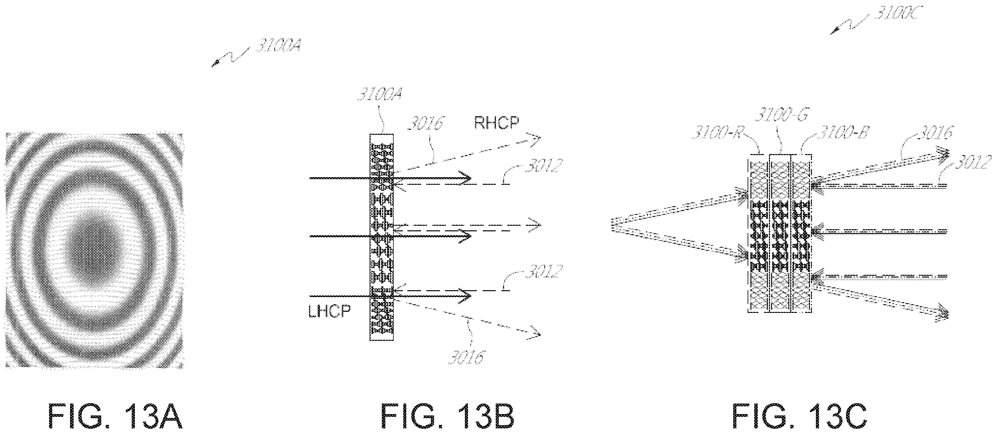

As described above with respect to Figure 12, some display devices comprise a plurality or a stack of switchable reflective elements. Advantageously, each of the switchable reflective elements can comprise liquid crystals, as described elsewhere in the specification and in the following with respect to, e.g. Figures 13A-13C. For example, the switchable reflective elements may be formed of unpolymerized or polymerizable liquid crystals, or reactive mesogens (RM), whose configurations can be altered by an external stimulus, e.g., electric field.

In some embodiments, switchable reflective elements can comprise a liquid crystal, such as, for example, a cholesteric liquid crystal (CLC) layer as discussed above. Figures 13A and 13B illustrate an example switchable reflective element 3100A that can be implemented as part of a display device, where switchable reflective element 3100A is formed of a patterned CLC layer serving as a reflective polarizing mirror. Figure 13A illustrates local orientations of liquid crystal directors (arrows) on top of a binary Fresnel lens pattern. Accordingly, the switchable reflective element 3100A can be configured to have optical power that is adjustable using an applied electric field. Embodiments of the switchable reflective elements 3100A can be used as an alternative to a deformable mirror illustrated with respect to, e.g., Figures 10A-10C and 11.

Referring to Figure 13B, when the switchable reflective element 3100A is illuminated with circularly polarized incident light 3012 having a circular polarization that corresponds to (e.g., having the same handedness as) the handedness of the CLC chirality (e.g., RHCP), the reflected light 3016 exhibits a lens effect similar to curved mirror reflectors described above. On the other hand, light with the orthogonal polarization (e.g., LHCP) is transmitted without interference. The switchable reflective element 3100A can be configured to have a bandwidth in a range of less than about 10 nm, less than about 25 nm, less than about 50 nm, less than about 100 nm, or some other range.

Figure 13C illustrates a switchable reflective element 3100C comprising a plurality of switchable reflective elements 3100-R, 3100-G and 3100-B. In the illustrated embodiment, the switchable reflective elements 3100-R, 3100-G and 3100-B are in a stacked configuration and are configured to reflect light within a range of wavelengths Δλ within the red, green and blue spectra, respectively. When the switchable reflective element 3100C is illuminated with circularly polarized incident light 3012 having a circular polarization that corresponds to the handedness of the CLC chirality (e.g., RHCP) and a wavelength within a range of wavelengths Δλ within the red, green and blue spectra, the reflected light 3016 exhibits a lens effects similar to curved mirror lenses. On the other hand, light with the orthogonal polarization (e.g., LHCP) is transmitted without interference.

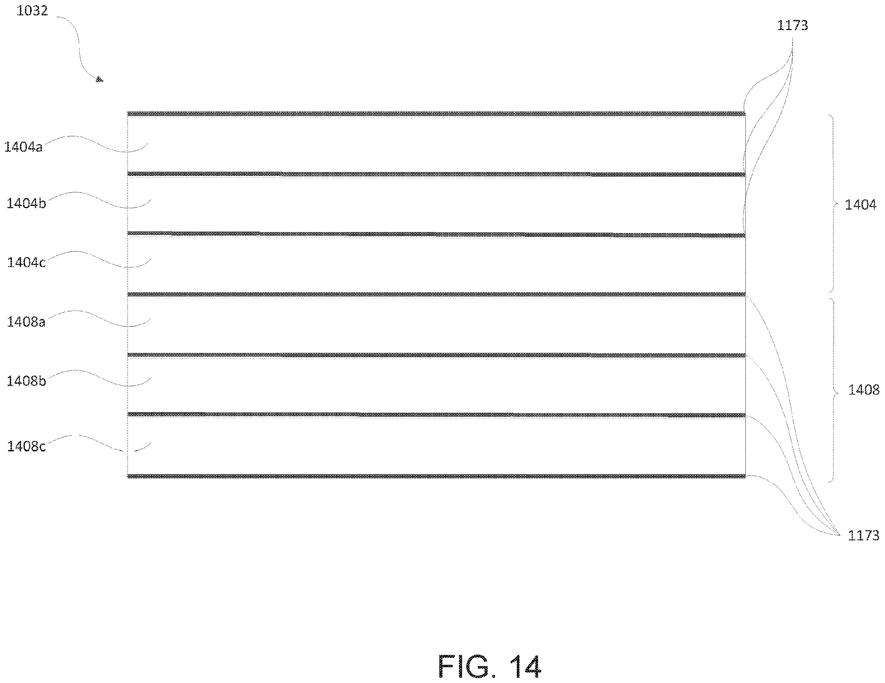

Figure 14 illustrates an embodiment of a stack or plurality of switchable reflective elements 1232 having a plurality of switchable reflective elements 1404a, 1404b, 1404c, 1408a, 1408b and 1408c. The reflective elements 1404a - 1404c are configured to have a first negative optical power and the reflective elements 1408a-1408c are configured to have a second negative optical power. The reflective elements 1404a and 1408a can be configured to reflect a first range of wavelengths (e.g., about 5-10 nm around red). The reflective elements 1404b and 1408b can be configured to reflect a second range of wavelengths (e.g., about 5-10 nm around green). The reflective elements 1404c and 1408c can be configured to reflect a third range of wavelengths (e.g., about 5-10 nm around blue). Each of the reflective elements 1404a, 1404b, 1404c, 1408a, 1408b and 1408c is sandwiched between a pair of electrodes 1173. A selected one of the reflective elements 1404a, 1404b, 1404c, 1408a, 1408b and 1408c can be switched on or off by applying an electrical voltage across the pair of electrodes 1173 bounding the selected one of the reflective elements 1404a, 1404b, 1404c, 1408a, 1408b and 1408c.

In various embodiments, each of the plurality of switchable reflective elements in the stack 1232 can comprise, for example, liquid crystal diffraction gratings, polymer dispersed liquid crystal grating structures and/or polarization grating structures. In various embodiments, each of the plurality of switchable reflective elements can be switched on or off in a frame sequential manner of on a pixel-by-pixel basis. The switchable reflective elements may comprise diffractive optical elements such as diffractive lenses.

Additionally, in various embodiments, the stack of reflective elements 1232 can be integrated with a deformable membrane (e.g., the variable power reflector 1032) to provide additional control to adjust the divergent optical power of the reflective stack.

Referring to Figure 12, image content from an image projection device 1282 (e.g., a spatial light modulator) is injected into the waveguide 2700 via an optical coupling element 2050. In various embodiments, the optical coupling element 2050 can comprise a polarization beam splitter. Light from the waveguide 2700 is directed towards the reflector 1232 by outcoupling elements associated with the waveguide 2700 (e.g., outcoupling elements 5700). In various embodiments, an light recycling system such as a polarization based light recycling system comprising arrangement of retarders as discussed above with Figure 11 can be used in the example of the display device illustrated in Figure 12 to redirect any light from the waveguide 2700 that is directed towards the user's eye 210 towards the reflector 1232. Light outcoupled from the waveguide 2700 and directed to the variable power reflector can be reflected from the variable power reflector by switching one of the reflective elements so that the user's eye 210 receives light from the display at a particular divergence (possibly including no divergence but rather collimation) and thus perceives the light as originating from a object at a particular depth in front of the wearer such as near the wearer or far away. It is noted that light from the ambient environment (also referred to herein as the world) 510 surrounding the display device is transmitted through the reflector 1232 towards the user's eye 210.

Although not illustrated, the waveguide 2700 in Figures 11 and 12 can include a stack of waveguides as described above with reference to Figure 6. The combination of the stack of waveguides and the variable reflector 1032 or the stack of switchable reflective elements 1232 can possibly be useful to provide increased ability to provide the desired depth.

It will be appreciated that each of the processes, methods, and algorithms described herein and/or depicted in the figures may be embodied in, and fully or partially automated by, code modules executed by one or more physical computing systems, hardware computer processors, application-specific circuitry, and/or electronic hardware configured to execute specific and particular computer instructions. For example, computing systems may include general purpose computers (e.g., servers) programmed with specific computer instructions or special purpose computers, special purpose circuitry, and so forth. A code module may be compiled and linked into an executable program, installed in a dynamic link library, or may be written in an interpreted programming language. In some embodiments, particular operations and methods may be performed by circuitry that is specific to a given function.

Further, certain embodiments of the functionality of the present disclosure are sufficiently mathematically, computationally, or technically complex that application-specific hardware or one or more physical computing devices (utilizing appropriate specialized executable instructions) may be necessary to perform the functionality, for example, due to the volume or complexity of the calculations involved or to provide results substantially in real-time. For example, a video may include many frames, with each frame having millions of pixels, and specifically programmed computer hardware is necessary to process the video data to provide a desired image processing task or application in a commercially reasonable amount of time.

Code modules or any type of data may be stored on any type of non-transitory computer-readable medium, such as physical computer storage including hard drives, solid state memory, random access memory (RAM), read only memory (ROM), optical disc, volatile or non-volatile storage, combinations of the same and/or the like. In some embodiments, the non-transitory computer-readable medium may be part of one or more of the local processing and data module (140), the remote processing module (150), and remote data repository (160). The methods and modules (or data) may also be transmitted as generated data signals (e.g., as part of a carrier wave or other analog or digital propagated signal) on a variety of computer-readable transmission mediums, including wireless-based and wired/cable-based mediums, and may take a variety of forms (e.g., as part of a single or multiplexed analog signal, or as multiple discrete digital packets or frames). The results of the disclosed processes or process steps may be stored, persistently or otherwise, in any type of non-transitory, tangible computer storage or may be communicated via a computer-readable transmission medium.

Any processes, blocks, states, steps, or functionalities in flow diagrams described herein and/or depicted in the attached figures should be understood as potentially representing code modules, segments, or portions of code which include one or more executable instructions for implementing specific functions (e.g., logical or arithmetical) or steps in the process. The various processes, blocks, states, steps, or functionalities may be combined, rearranged, added to, deleted from, modified, or otherwise changed from the illustrative examples provided herein. In some embodiments, additional or different computing systems or code modules may perform some or all of the functionalities described herein. The methods and processes described herein are also not limited to any particular sequence, and the blocks, steps, or states relating thereto may be performed in other sequences that are appropriate, for example, in serial, in parallel, or in some other manner. Tasks or events may be added to or removed from the disclosed example embodiments. Moreover, the separation of various system components in the embodiments described herein is for illustrative purposes and should not be understood as requiring such separation in all embodiments. It should be understood that the described program components, methods, and systems may generally be integrated together in a single computer product or packaged into multiple computer products.

In the foregoing specification, the invention has been described with reference to specific embodiments thereof. The specification and drawings are, accordingly, to be regarded in an illustrative rather than restrictive sense.

Indeed, it will be appreciated that the systems and methods of the disclosure each have several innovative aspects, no single one of which is solely responsible or required for the desirable attributes disclosed herein. The various features and processes described above may be used independently of one another, or may be combined in various ways. All possible combinations and subcombinations are intended to fall within the scope of this disclosure.

Certain features that are described in this specification in the context of separate embodiments also may be implemented in combination in a single embodiment. Conversely, various features that are described in the context of a single embodiment also may be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination. No single feature or group of features is necessary or indispensable to each and every embodiment.

It will be appreciated that conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. In addition, the articles "a," "an," and "the" as used in this application and the appended claims are to be construed to mean "one or more" or "at least one" unless specified otherwise. Similarly, while operations may be depicted in the drawings in a particular order, it is to be recognized that such operations need not be performed in the particular order shown or in sequential order, or that all illustrated operations be performed, to achieve desirable results. Further, the drawings may schematically depict one more example processes in the form of a flowchart. However, other operations that are not depicted may be incorporated in the example methods and processes that are schematically illustrated. For example, one or more additional operations may be performed before, after, simultaneously, or between any of the illustrated operations. Additionally, the operations may be rearranged or reordered in other embodiments. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products. Additionally, other embodiments are within the scope of the following claims. In some cases, the actions recited in the claims may be performed in a different order and still achieve desirable results.

Accordingly, the claims are not intended to be limited to the embodiments shown herein, but are to be accorded the widest scope consistent with this disclosure, the principles and the novel features disclosed herein.

## Claims

1. A display device, comprising:
a waveguide (2700) configured to propagate visible light under total internal reflection in a direction parallel to a major surface of the waveguide and to outcouple the visible light in a direction normal to the major surface of the waveguide away from a user of the display device; and
a deformable mirror (1032) positioned on a world side of the waveguide, the deformable mirror (1032) configured to reflect visible light outcoupled from the waveguide (2700) having a first polarization, which is traveling away from the user of the display device, back through the waveguide toward the user to present an image from the display device into an eye of the user that appears to originate from a certain depth plane to the user in dependence on an adjustable optical power of the deformable mirror, wherein the deformable mirror (1032) comprises at least one of a notch reflector or one or more cholesteric liquid crystal (CLC) layers (3100A), wherein each of the CLC layers (3100A) comprises a plurality of chiral structures, wherein each of the chiral structures comprises a plurality of liquid crystal molecules that extend in a layer depth direction and are successively rotated in a first rotation direction, wherein arrangements of the liquid crystal molecules of the chiral structures vary periodically in a lateral direction perpendicular to the layer depth direction such that the one or more CLC layers (3100A) are configured to Bragg-reflect incident light.

2. The display device of Claim 1, wherein different ones of the one or more CLC layers (3100A) are configured to reflect visible light having a wavelength in a wavelength range corresponding to different ones of red, green or blue light, while being configured to transmit light having a wavelength outside the wavelength range.

3. The display device of Claim 1, wherein each of the chiral structures of the CLC layers (3100A) comprises a plurality of liquid crystal molecules that extend in a layer depth direction by at least a helical pitch, wherein different ones of the one or more CLC layers have different helical pitches.

4. The display device of Claim 1, wherein different ones of the one or more CLC layers (3100A) have substantially the same optical power.

5. The display device of Claim 1, wherein the display device comprises a plurality of notch reflectors, wherein each of the notch reflectors is configured to reflect visible light having a first polarization, wherein each of the notch reflector comprises one or more cholesteric liquid crystal (CLC) layers (3100A), wherein each of the CLC layers comprises a plurality of chiral structures, wherein each of the chiral structures comprises a plurality of liquid crystal molecules that extend in a layer depth direction and are successively rotated in a first rotation direction, wherein arrangements of the liquid crystal molecules of the chiral structures vary periodically in a lateral direction perpendicular to the layer depth direction such that the one or more CLC layers are configured to Bragg-reflect incident light.

6. The display device of Claim 5, wherein different ones of the plurality of notch reflectors have different optical powers.

7. The display device of Claim 5, further comprising a half-wave plate corresponding to each of the plurality of notch reflectors.

8. The display device of claim 1, wherein the waveguide (2700) comprises a cholesteric liquid crystal diffraction grating (5700) configured to outcouple some of the visible light propagating in the waveguide towards the deformable mirror (1032).

9. The display device of claim 1, wherein the deformable mirror (1032) is configured to redirect the visible light directed by the waveguide (2700) toward the deformable mirror (1032) back toward the waveguide.

10. The display device of claim 9, wherein the deformable mirror (1032) comprises a forward side and a rearward side, the rearward side positioned closer to the waveguide (2700) than the forward side, and wherein the deformable mirror (1032) is configured to allow at least some light transmitted from an external light source (510) positioned on the forward side of the deformable mirror (1032) to pass through the deformable mirror (1032).

11. The display device of claim 1, further comprising a frame (80) configured to dispose the waveguide (2700) forward of an eye (210) of a wearer such that the waveguide comprises a forward side and a rearward side, the rearward side positioned closer to the eye (210) than the forward side, wherein the deformable mirror (1032) is disposed on the forward side and is configured to redirect light from the waveguide (2700) toward the eye (210) of the wearer.

12. The display device of claim 11, further comprising a light projector (2000) configured to output the visible light toward the waveguide (2700), wherein the deformable mirror (1302) is configured to reflect the visible light having the first polarization while transmitting light from an external light source (510) located forward of the deformable mirror (1032).

13. The display device of claim 12, further comprising one or more in-coupling elements (4600) disposed with respect to the waveguide (2700) to redirect the visible light from the light projector (2000) into the waveguide (2700).

14. The display device of claim 11, further comprising one or more out-coupling elements (5700) disposed with respect to the waveguide (2700) to selectively extract some of the visible light propagating in the waveguide and direct the extracted visible light toward the deformable mirror (1032), the light being redirected from the deformable mirror (1032) back through the waveguide (2700) and into the eye (210) of the wearer, preferably wherein the one or more out-coupling elements (5700) comprise a cholesteric liquid crystal diffraction grating.

## Patentansprüche

1. Anzeigevorrichtung, umfassend:
einen Wellenleiter (2700), der dazu ausgebildet ist, sichtbares Licht unter Totalreflexion in einer Richtung parallel zu einer Hauptfläche des Wellenleiters zu propagieren und das sichtbare Licht in einer Richtung senkrecht zu der Hauptfläche des Wellenleiters von einem Benutzer der Anzeigevorrichtung weg auszukoppeln; und
einen verformbaren Spiegel (1032), der auf einer Weltseite des Wellenleiters positioniert ist, wobei der verformbare Spiegel (1032) dazu ausgebildet ist, sichtbares Licht, das aus dem Wellenleiter (2700) mit einer ersten Polarisation ausgekoppelt wird und sich von dem Benutzer der Anzeigevorrichtung wegbewegt, zurück durch den Wellenleiter zu dem Benutzer zu reflektieren, um ein Bild von der Anzeigevorrichtung in ein Auge des Benutzers zu präsentieren, das dem Benutzer in Abhängigkeit von einer einstellbaren Brechkraft des verformbaren Spiegels aus einer bestimmten Tiefenebene zu stammen scheint, wobei der verformbare Spiegel (1032) mindestens eines von einem Kerbreflektor oder einer oder mehreren cholesterischen Flüssigkristallschichten (CLC-Schichten) (3100A) umfasst, wobei jede der CLC-Schichten (3100A) eine Mehrzahl von chiralen Strukturen umfasst, wobei jede der chiralen Strukturen eine Mehrzahl von Flüssigkristallmolekülen umfasst, die sich in einer Schichttiefenrichtung erstrecken und sukzessive in einer ersten Drehrichtung gedreht sind, wobei Anordnungen der Flüssigkristallmoleküle der chiralen Strukturen periodisch in einer lateralen Richtung senkrecht zu der Schichttiefenrichtung variieren, sodass die eine oder die mehreren CLC-Schichten (3100A) dazu ausgebildet sind, einfallendes Licht durch Bragg-Reflexion zu reflektieren.

2. Anzeigevorrichtung nach Anspruch 1, wobei verschiedene der einen oder mehreren CLC-Schichten (3100A) dazu ausgebildet sind, sichtbares Licht mit einer Wellenlänge in einem Wellenlängenbereich zu reflektieren, der verschiedenen von rotem, grünem oder blauem Licht entspricht, während sie dazu ausgebildet sind, Licht mit einer Wellenlänge außerhalb des Wellenlängenbereichs zu transmittieren.

3. Anzeigevorrichtung nach Anspruch 1, wobei jede der chiralen Strukturen der CLC-Schichten (3100A) eine Mehrzahl von Flüssigkristallmolekülen umfasst, die sich in einer Schichttiefenrichtung um mindestens eine helikale Ganghöhe erstrecken, wobei verschiedene der einen oder mehreren CLC-Schichten unterschiedliche helikale Ganghöhen aufweisen.

4. Anzeigevorrichtung nach Anspruch 1, wobei verschiedene der einen oder mehreren CLC-Schichten (3100A) im Wesentlichen die gleiche Brechkraft aufweisen.

5. Anzeigevorrichtung nach Anspruch 1, wobei die Anzeigevorrichtung eine Mehrzahl von Kerbreflektoren umfasst, wobei jeder der Kerbreflektoren dazu ausgebildet ist, sichtbares Licht mit einer ersten Polarisation zu reflektieren, wobei jeder der Kerbreflektor eine oder mehrere cholesterische Flüssigkristallschichten (CLC-Schichten) (3100A) umfasst, wobei jede der CLC-Schichten eine Mehrzahl von chiralen Strukturen umfasst, wobei jede der chiralen Strukturen eine Mehrzahl von Flüssigkristallmolekülen umfasst, die sich in einer Schichttiefenrichtung erstrecken und sukzessive in einer ersten Drehrichtung gedreht sind, wobei Anordnungen der Flüssigkristallmoleküle der chiralen Strukturen periodisch in einer lateralen Richtung senkrecht zu der Schichttiefenrichtung variieren, sodass die eine oder die mehreren CLC-Schichten dazu ausgebildet sind, einfallendes Licht durch Bragg-Reflexion zu reflektieren.

6. Anzeigevorrichtung nach Anspruch 5, wobei verschiedene der Mehrzahl von Kerbreflektoren unterschiedliche Brechkräfte aufweisen.

7. Anzeigevorrichtung nach Anspruch 5, ferner umfassend eine Halbwellenplatte, die jedem der Mehrzahl von Kerbreflektoren entspricht.

8. Anzeigevorrichtung nach Anspruch 1, wobei der Wellenleiter (2700) ein cholesterisches Flüssigkristall-Beugungsgitter (5700) umfasst, das dazu ausgebildet ist, einen Teil des in dem Wellenleiter propagierenden sichtbaren Lichts zu dem verformbaren Spiegel (1032) auszukoppeln.

9. Anzeigevorrichtung nach Anspruch 1, wobei der verformbare Spiegel (1032) dazu ausgebildet ist, das von dem Wellenleiter (2700) zu dem verformbaren Spiegel (1032) gerichtete sichtbare Licht zurück zu dem Wellenleiter umzulenken.

10. Anzeigevorrichtung nach Anspruch 9, wobei der verformbare Spiegel (1032) eine Vorderseite und eine Rückseite umfasst, wobei die Rückseite näher an dem Wellenleiter (2700) positioniert ist als die Vorderseite, und wobei der verformbare Spiegel (1032) dazu ausgebildet ist, zumindest etwas Licht, das von einer externen Lichtquelle (510) transmittiert wird, die auf der Vorderseite des verformbaren Spiegels (1032) positioniert ist, durch den verformbaren Spiegel (1032) hindurchtreten zu lassen.

11. Anzeigevorrichtung nach Anspruch 1, ferner umfassend einen Rahmen (80), der dazu ausgebildet ist, den Wellenleiter (2700) vor einem Auge (210) eines Trägers anzuordnen, sodass der Wellenleiter eine Vorderseite und eine Rückseite umfasst, wobei die Rückseite näher an dem Auge (210) positioniert ist als die Vorderseite, wobei der verformbare Spiegel (1032) auf der Vorderseite angeordnet ist und dazu ausgebildet ist, Licht von dem Wellenleiter (2700) zu dem Auge (210) des Trägers umzulenken.

12. Anzeigevorrichtung nach Anspruch 11, ferner umfassend einen Lichtprojektor (2000), der dazu ausgebildet ist, das sichtbare Licht zu dem Wellenleiter (2700) auszugeben, wobei der verformbare Spiegel (1302) dazu ausgebildet ist, das sichtbare Licht mit der ersten Polarisation zu reflektieren, während er Licht von einer externen Lichtquelle (510) transmittiert, die sich vor dem verformbaren Spiegel (1032) befindet.

13. Anzeigevorrichtung nach Anspruch 12, ferner umfassend ein oder mehrere Einkopplungselemente (4600), die in Bezug auf den Wellenleiter (2700) angeordnet sind, um das sichtbare Licht von dem Lichtprojektor (2000) in den Wellenleiter (2700) umzulenken.

14. Anzeigevorrichtung nach Anspruch 11, ferner umfassend ein oder mehrere Auskopplungselemente (5700), die in Bezug auf den Wellenleiter (2700) angeordnet sind, um selektiv einen Teil des in dem Wellenleiter propagierenden sichtbaren Lichts zu extrahieren und das extrahierte sichtbare Licht zu dem verformbaren Spiegel (1032) zu lenken, wobei das Licht von dem verformbaren Spiegel (1032) zurück durch den Wellenleiter (2700) und in das Auge (210) des Trägers umgelenkt wird, wobei vorzugsweise das eine oder die mehreren Auskopplungselemente (5700) ein cholesterisches Flüssigkristall-Beugungsgitter umfassen.

## Revendications

1. Dispositif d'affichage, comprenant :
un guide d'ondes (2700) configuré pour propager de la lumière visible par réflexion totale interne dans une direction parallèle à une surface principale du guide d'ondes et pour extraire la lumière visible dans une direction normale à la surface principale du guide d'ondes, à l'opposé d'un utilisateur du dispositif d'affichage ; et
un miroir déformable (1032) positionné du côté monde du guide d'ondes, le miroir déformable (1032) étant configuré pour réfléchir de la lumière visible extraite du guide d'ondes (2700), ayant une première polarisation, qui se propage à l'écart de l'utilisateur du dispositif d'affichage, en retour à travers le guide d'ondes vers l'utilisateur afin de présenter une image provenant du dispositif d'affichage dans un œil de l'utilisateur, qui semble provenir, pour l'utilisateur, d'un certain plan de profondeur en fonction d'une puissance optique réglable du miroir déformable, dans lequel le miroir déformable (1032) comprend au moins l'un parmi un réflecteur à encoche ou une ou plusieurs couches de cristaux liquides cholestériques (CLC) (3100A), dans lequel chacune des couches CLC (3100A) comprend une pluralité de structures chirales, dans lequel chacune des structures chirales comprend une pluralité de molécules de cristaux liquides qui s'étendent dans une direction de profondeur de couche et sont successivement tournées dans une première direction de rotation, dans lequel les agencements des molécules de cristaux liquides des structures chirales varient périodiquement dans une direction latérale perpendiculaire à la direction de profondeur de couche de sorte que les une ou plusieurs couches CLC (3100A) sont configurées pour effectuer une réflexion de Bragg de la lumière incidente.

2. Dispositif d'affichage selon la revendication 1, dans lequel différentes couches parmi les une ou plusieurs couches CLC (3100A) sont configurées pour réfléchir de la lumière visible ayant une longueur d'onde dans une plage de longueurs d'onde correspondant à différentes lumières parmi la lumière rouge, verte ou bleue, tout en étant configurées pour transmettre de la lumière ayant une longueur d'onde située à l'extérieur de la plage de longueurs d'onde.

3. Dispositif d'affichage selon la revendication 1, dans lequel chacune des structures chirales des couches CLC (3100A) comprend une pluralité de molécules de cristaux liquides qui s'étendent dans une direction de profondeur de couche d'au moins un pas hélicoïdal, dans lequel différentes couches parmi les une ou plusieurs couches CLC ont des pas hélicoïdaux différents.

4. Dispositif d'affichage selon la revendication 1, dans lequel différentes couches parmi les une ou plusieurs couches CLC (3100A) ont sensiblement la même puissance optique.

5. Dispositif d'affichage selon la revendication 1, dans lequel le dispositif d'affichage comprend une pluralité de réflecteurs à encoche, dans lequel chacun des réflecteurs à encoche est configuré pour réfléchir de la lumière visible ayant une première polarisation, dans lequel chacun des réflecteurs à encoche comprend une ou plusieurs couches de cristaux liquides cholestériques (CLC) (3100A), dans lequel chacune des couches CLC comprend une pluralité de structures chirales, dans lequel chacune des structures chirales comprend une pluralité de molécules de cristaux liquides qui s'étendent dans une direction de profondeur de couche et sont successivement tournées dans une première direction de rotation, dans lequel les agencements des molécules de cristaux liquides des structures chirales varient périodiquement dans une direction latérale perpendiculaire à la direction de profondeur de couche de sorte que les une ou plusieurs couches CLC sont configurées pour effectuer une réflexion de Bragg de la lumière incidente.

6. Dispositif d'affichage selon la revendication 5, dans lequel différents réflecteurs de la pluralité de réflecteurs à encoche ont des puissances optiques différentes.

7. Dispositif d'affichage selon la revendication 5, comprenant en outre une plaque demi-onde correspondant à chacune de la pluralité de réflecteurs à encoche.

8. Dispositif d'affichage selon la revendication 1, dans lequel le guide d'ondes (2700) comprend un réseau de diffraction à cristaux liquides cholestériques (5700) configuré pour extraire une partie de la lumière visible se propageant dans le guide d'ondes vers le miroir déformable (1032).

9. Dispositif d'affichage selon la revendication 1, dans lequel le miroir déformable (1032) est configuré pour rediriger la lumière visible dirigée par le guide d'ondes (2700) vers le miroir déformable (1032) en retour vers le guide d'ondes.

10. Dispositif d'affichage selon la revendication 9, dans lequel le miroir déformable (1032) comprend un côté avant et un côté arrière, le côté arrière étant positionné plus près du guide d'ondes (2700) que le côté avant, et dans lequel le miroir déformable (1032) est configuré pour permettre à au moins une partie de la lumière transmise par une source de lumière externe (510) positionnée sur le côté avant du miroir déformable (1032) de traverser le miroir déformable (1032).

11. Dispositif d'affichage selon la revendication 1, comprenant en outre un cadre (80) configuré pour disposer le guide d'ondes (2700) devant un œil (210) d'un porteur de sorte que le guide d'ondes comprend un côté avant et un côté arrière, le côté arrière étant positionné plus près de l'œil (210) que le côté avant, dans lequel le miroir déformable (1032) est disposé sur le côté avant et est configuré pour rediriger de la lumière provenant du guide d'ondes (2700) vers l'œil (210) du porteur.

12. Dispositif d'affichage selon la revendication 11, comprenant en outre un projecteur de lumière (2000) configuré pour émettre la lumière visible vers le guide d'ondes (2700), dans lequel le miroir déformable (1302) est configuré pour réfléchir la lumière visible ayant la première polarisation tout en transmettant de la lumière provenant d'une source de lumière externe (510) située en avant du miroir déformable (1032).

13. Dispositif d'affichage selon la revendication 12, comprenant en outre un ou plusieurs éléments de couplage d'entrée (4600) disposés par rapport au guide d'ondes (2700) pour rediriger la lumière visible provenant du projecteur de lumière (2000) dans le guide d'ondes (2700).

14. Dispositif d'affichage selon la revendication 11, comprenant en outre un ou plusieurs éléments de couplage de sortie (5700) disposés par rapport au guide d'ondes (2700) pour extraire sélectivement une partie de la lumière visible se propageant dans le guide d'ondes et diriger la lumière visible extraite vers le miroir déformable (1032), la lumière étant redirigée à partir du miroir déformable (1032) en retour à travers le guide d'ondes (2700) et dans l'œil (210) du porteur, de préférence dans lequel les un ou plusieurs éléments de sortie (5700) comprennent un réseau de diffraction à cristaux liquides cholestériques.
